# EUROPEAN PATENT APPLICATION

(11) **EP 4 657 815 A1**
(43) Date of publication of application: **03.12.2025**
(21) Application number: 24755889.3
(22) Date of filing: 18.01.2024
(51) Int. Cl.: H04L 41/14

(54) **COMMUNICATION METHOD AND COMMUNICATION APPARATUS**

(30) Priority: 14.02.2023 CN 202310148870
(71) Applicant: Huawei Technologies Co., Ltd., Shenzhen, Guangdong 518129 (CN)
(72) Inventor: CHENG, Wenjie, Shenzhen, Guangdong 518129 (CN); ZENG, Yu, Shenzhen, Guangdong 518129 (CN); GENG, Tingting, Shenzhen, Guangdong 518129 (CN)
(74) Representative: Isarpatent
(86) International application number: PCT/CN2024/073028
(87) International publication number: WO 2024/169514

(57) **Abstract**

This application provides a communication method and a communication apparatus. A first network device on which an AI model is deployed may implicitly indicate, based on information about the AI model, measurement information required for optimizing the AI model; and a second network device may determine, based on the information about the AI model, the measurement information that needs to be obtained, and provide the obtained measurement information for the first network device. In this way, the first network device can obtain, from the second network device, the measurement information for optimizing the AI model. This helps reduce signaling overheads and improve accuracy of optimizing the AI model.

## Description

This application claims priority to Chinese Patent Application No. 202310148870.2, filed with the China National Intellectual Property Administration on February 14, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

With improvement of data storage and computing capabilities, artificial intelligence (artificial intelligence, AI) technologies are being increasingly applied. The AI technologies can be applied to a wireless communication system to improve network performance and user experience through intelligent collection and analysis of data.

When network devices are equipped with AI models, network policies applied to the wireless communication system can be derived based on these AI models. By optimizing the AI models on the network devices, better network policies can be obtained, to improve performance of the wireless communication system. Therefore, there is an urgent need to address the problem of how to optimize AI models.

### SUMMARY

This application provides a communication method and a communication apparatus that facilitate optimization of an AI model on a network device.

According to a first aspect, a communication method is provided. The method is applied to a first network device. The method may be performed by the first network device, or may be performed by a module or a unit (for example, a chip or a circuit) in the first network device. This is not limited.

The method includes: sending first information to a second network device, where the first information includes information about an AI model, and the information about the AI model is for determining a first measurement item; and receiving measurement information of the first measurement item from the second network device, where the measurement information is for optimizing the AI model, and the second network device is configured to execute a network policy obtained based on the AI model.

In the foregoing method, the measurement information required for optimizing the AI model is implicitly indicated to the second network device based on the information about the AI model. This helps reduce signaling overheads. In addition, because measurement information required for different AI models may be different, according to the method, a case in which the second network device provides, for the first network device, measurement information that does not satisfy a requirement of the AI model can be avoided. This helps improve accuracy of optimizing the AI model.

With reference to the first aspect, in a possible implementation, the information about the AI model includes an identifier of the AI model and/or information about a service corresponding to the AI model.

With reference to the first aspect or any implementation of the first aspect, in another possible implementation, the first information further includes identifiers of one or more to-be-measured terminals and/or first measurement configuration information for measuring the first measurement item.

According to the foregoing method, when the first information includes the identifiers of the one or more to-be-measured terminals, measurement information of a measurement item at a terminal granularity can be obtained, so that the first network device obtains more comprehensive information to optimize the AI model. This helps improve efficiency of optimizing the AI model. When the first information includes the first measurement configuration information for measuring the first measurement item, that is, the first network device provides the measurement configuration information for the second network device, a case in which the second network device sends, to the first network device, the measurement information that does not satisfy the requirement of the AI model is avoided. This helps improve accuracy of optimizing the AI model.

With reference to the first aspect or any implementation of the first aspect, in another possible implementation, the first measurement configuration information includes at least one of the following information: a measurement time interval, measurement start time, or measurement termination information.

With reference to the first aspect or any implementation of the first aspect, in another possible implementation, the measurement termination information includes at least one of the following information: measurement duration, a measurement count, measurement end time, or a measurement termination condition.

With reference to the first aspect or any implementation of the first aspect, in another possible implementation, the measurement termination condition includes at least one of the following information: an identifier of an AI-triggered event or configuration information of an AI-triggered event.

With reference to the first aspect or any implementation of the first aspect, in another possible implementation, the measurement information includes a cause of measurement termination.

With reference to the first aspect or any implementation of the first aspect, in another possible implementation, the method further includes: receiving second information from the second network device, where the second information indicates at least one of the first measurement item, a terminal that supports the first measurement item in the one or more to-be-measured terminals, or second measurement configuration information, and the second measurement configuration information is measurement configuration information actually used for measuring the first measurement item.

In this way, the first network device may determine, with reference to the second information, whether to optimize the AI model by using the measurement information sent by the second network device, to improve accuracy of optimizing the AI model.

With reference to the first aspect or any implementation of the first aspect, in another possible implementation, the method further includes: receiving third information from the second network device, where the third information indicates retention duration of a terminal context.

Because the second network device needs specific duration to obtain and perform transmission of the measurement information, the second network device may indicate retention time of the terminal context to the first network device, to avoid a case in which due to premature release of the terminal context by the first network device, the first network device fails to identify the measurement information sent by the second network device, and then fails to optimize the AI model.

With reference to the first aspect or any implementation of the first aspect, in another possible implementation, the method further includes: sending fourth information to the second network device, where the fourth information is for requesting the retention duration.

Because the second network device needs the specific duration to obtain and perform transmission of the measurement information, if the first network device fails to determine the retention duration of the terminal context, the first network device may request, from the second network device, the retention time of the terminal context that is indicated by the second network device, to avoid the case in which due to premature release of the terminal context by the first network device, the first network device fails to identify the measurement information sent by the second network device, and then fails to optimize the AI model.

With reference to the first aspect or any implementation of the first aspect, in another possible implementation, the first measurement item includes at least one of the following measurement items: a terminal performance measurement item, a terminal traffic measurement item, a terminal service measurement item, or a terminal movement path measurement item.

With reference to the first aspect or any implementation of the first aspect, in another possible implementation, when the first measurement item is a terminal-level measurement item, the measurement information obtained by the second network device may include one or more pieces of measurement information of the first measurement item, and the measurement information includes: a measurement result of the first measurement item, measurement time corresponding to the measurement result, and information about a measurement position that corresponds to the measurement result. The information about the measurement position may include an identifier of an access network device in which the terminal is located and/or an identifier of a cell in which the terminal is located.

For example, the second network device may be an access network device or a core network device. When the second network device is the core network device, the measurement information may further include a connection status of the terminal.

With reference to the first aspect or any implementation of the first aspect, in another possible implementation, the terminal performance measurement item includes at least one of the following measurement items: an uplink throughput, a downlink throughput, an uplink data packet delay, a downlink data packet delay, an uplink packet loss rate, or a downlink packet loss rate.

With reference to the first aspect or any implementation of the first aspect, in another possible implementation, the first information is included in a handover cause of a handover request.

With reference to the first aspect or any implementation of the first aspect, in another possible implementation, a service corresponding to the network policy includes at least one of the following: network energy saving, load balancing, mobility optimization, terminal movement path prediction, or terminal traffic prediction.

According to a second aspect, a communication method is provided. The method is applied to a second network device. The method may be performed by the second network device, or may be performed by a module or a unit (for example, a chip or a circuit) in the second network device. This is not limited. For beneficial effects of the second aspect or implementations of the second aspect, refer to beneficial effects of the first aspect or implementations of the first aspect. Details are not described again.

The method includes: receiving first information from a first network device, where the first information includes information about an AI model, and the information about the AI model is for determining a first measurement item; obtaining measurement information based on the first measurement item; and sending the measurement information to the first network device, where the measurement information is for optimizing the AI model, and the second network device is configured to execute a network policy obtained based on the AI model.

With reference to the second aspect, in a possible implementation, the method further includes: determining the first measurement item based on a correspondence between the information about the AI model and the first measurement item.

With reference to the second aspect or any implementation of the second aspect, in another possible implementation, the information about the AI model includes an identifier of the AI model and/or information about a service corresponding to the AI model.

With reference to the second aspect or any implementation of the second aspect, in another possible implementation, the first information further includes identifiers of one or more to-be-measured terminals and/or first measurement configuration information for measuring the first measurement item.

With reference to the second aspect or any implementation of the second aspect, in another possible implementation, the first measurement configuration information includes at least one of the following information: a measurement time interval, measurement start time, or measurement termination information.

With reference to the second aspect or any implementation of the second aspect, in another possible implementation, the measurement termination information includes at least one of the following information: measurement duration, a measurement count, measurement end time, or a measurement termination condition.

With reference to the second aspect or any implementation of the second aspect, in another possible implementation, the measurement termination condition includes at least one of the following information: an identifier of an AI-triggered event or configuration information of an AI-triggered event.

With reference to the second aspect or any implementation of the second aspect, in another possible implementation, the measurement information includes a cause of measurement termination.

With reference to the second aspect or any implementation of the second aspect, in another possible implementation, the method further includes: sending second information to the first network device, where the second information indicates at least one of the first measurement item, a terminal that supports the first measurement item in the one or more to-be-measured terminals, or second measurement configuration information, and the second measurement configuration information is measurement configuration information actually used for measuring the first measurement item.

With reference to the second aspect or any implementation of the second aspect, in another possible implementation, the method further includes: determining the second measurement configuration information based on the first information, where the second measurement configuration information is the measurement configuration information actually used for measuring the first measurement item.

With reference to the second aspect or any implementation of the second aspect, in another possible implementation, the method further includes: sending third information to the first network device, where the third information indicates retention duration of a terminal context.

With reference to the second aspect or any implementation of the second aspect, in another possible implementation, the method further includes: receiving fourth information from the first network device, where the fourth information is for requesting the retention duration.

With reference to the second aspect or any implementation of the second aspect, in another possible implementation, the first measurement item includes at least one of the following measurement items: a terminal performance measurement item, a terminal traffic measurement item, a terminal service measurement item, or a terminal movement path measurement item.

With reference to the second aspect or any implementation of the second aspect, in another possible implementation, when the first measurement item is a terminal-level measurement item, the measurement information obtained by the second network device may include one or more pieces of measurement information of the first measurement item, and the measurement information includes: a measurement result of the first measurement item, measurement time corresponding to the measurement result, and information about a measurement position that corresponds to the measurement result. The information about the measurement position may include an identifier of an access network device in which the terminal is located and/or an identifier of a cell in which the terminal is located.

For example, the second network device may be an access network device or a core network device.

With reference to the second aspect or any implementation of the second aspect, in another possible implementation, the terminal performance measurement item includes at least one of the following measurement items: an uplink throughput, a downlink throughput, an uplink data packet delay, a downlink data packet delay, an uplink packet loss rate, or a downlink packet loss rate.

With reference to the second aspect or any implementation of the second aspect, in another possible implementation, the first information is included in a handover cause of a handover request.

With reference to the second aspect or any implementation of the second aspect, in another possible implementation, a service corresponding to the network policy includes at least one of the following: network energy saving, load balancing, mobility optimization, terminal movement path prediction, or terminal traffic prediction.

According to a third aspect, a communication method is provided. The method is applied to a first network device. The method may be performed by the first network device, or may be performed by a module or a unit (for example, a chip or a circuit) in the first network device. This is not limited.

The method includes: sending first information to a second network device, where the first information is for determining a first measurement item, and the first information includes first measurement configuration information for measuring the first measurement item; and receiving measurement information from the second network device, where the measurement information is for optimizing an AI model, the second network device is configured to execute a network policy obtained based on the AI model, and a second measurement item corresponding to the measurement information is included in the first measurement item.

According to the foregoing method, the first network device may provide, for the second network device, information about a measurement item that corresponds to the measurement information required for optimizing the AI model and corresponding measurement configuration information; and the second network device may collect the measurement information based on the information provided by the first network device, and provide the collected measurement information for the first network device. Because measurement information required for different AI models may be different, according to the method, a case in which the second network device provides, for the first network device, measurement information that does not satisfy a requirement of the AI model can be avoided. Therefore, the method helps improve accuracy of optimizing the AI model.

With reference to the third aspect, in a possible implementation, the first measurement configuration information includes at least one of the following information: a measurement time interval, measurement start time, or measurement termination information.

With reference to the third aspect or any implementation of the third aspect, in another possible implementation, the measurement termination information includes at least one of the following information: measurement duration, a measurement count, measurement end time, or a measurement termination condition.

With reference to the third aspect or any implementation of the third aspect, in another possible implementation, the measurement termination condition includes at least one of the following information: an identifier of an AI-triggered event or configuration information of an AI-triggered event.

With reference to the third aspect or any implementation of the third aspect, in another possible implementation, the measurement information includes a cause of measurement termination.

With reference to the third aspect or any implementation of the third aspect, in another possible implementation, the first information includes indication information of the first measurement item and the first measurement configuration information; or the first information includes information about the AI model and the first measurement configuration information.

According to the foregoing method, when the first information includes the indication information of the first measurement item, that is, the first network device may explicitly indicate the measurement information required for optimizing the AI model, in this manner, the first network device may more accurately indicate, to the second network device, the measurement information for optimizing the AI model. When the first information includes the information about the AI model, that is, the first network device may implicitly indicate, based on the information about the AI model, the measurement information required for optimizing the AI model, this helps reduce signaling overheads.

With reference to the third aspect or any implementation of the third aspect, in another possible implementation, the first information further includes identifiers of one or more to-be-measured terminals.

According to the foregoing method, when the first information includes the identifiers of the one or more to-be-measured terminals, measurement information of a measurement item at a terminal granularity can be obtained, so that the first network device obtains more comprehensive information to optimize the AI model. This helps improve efficiency of optimizing the AI model.

With reference to the third aspect or any implementation of the third aspect, in another possible implementation, the information about the AI model includes an identifier of the AI model and/or information about a service corresponding to the AI model.

With reference to the third aspect or any implementation of the third aspect, in another possible implementation, the method further includes: receiving second information from the second network device, where the second information indicates at least one of the second measurement item, a terminal that supports the second measurement item in the one or more to-be-measured terminals, or second measurement configuration information, and the second measurement configuration information is for measuring the second measurement item.

In this way, the first network device may determine, with reference to the second information, whether to optimize the AI model by using the measurement information sent by the second network device.

With reference to the third aspect or any implementation of the third aspect, in another possible implementation, the method further includes: receiving third information from the second network device, where the third information indicates retention duration of a terminal context.

Because the second network device needs specific duration to obtain and perform transmission of the measurement information, the second network device may indicate retention time of the terminal context to the first network device, to avoid a case in which due to premature release of the terminal context by the first network device, the first network device fails to identify the measurement information sent by the second network device, and then fails to optimize the AI model.

With reference to the third aspect or any implementation of the third aspect, in another possible implementation, the method further includes: sending fourth information to the second network device, where the fourth information is for requesting the retention duration.

Because the second network device needs the specific duration to obtain and perform transmission of the measurement information, if the first network device fails to determine the retention duration of the terminal context, the first network device may request, from the second network device, the retention time of the terminal context that is indicated by the second network device, to avoid the case in which due to premature release of the terminal context by the first network device, the first network device fails to identify the measurement information sent by the second network device, and then fails to optimize the AI model.

With reference to the third aspect or any implementation of the third aspect, in another possible implementation, the first measurement item includes at least one of the following measurement items: a terminal performance measurement item, a terminal traffic measurement item, a terminal service measurement item, or a terminal movement path measurement item.

With reference to the third aspect or any implementation of the third aspect, in another possible implementation, when the first measurement item is a terminal-level measurement item, the measurement information obtained by the second network device may include one or more pieces of measurement information of the first measurement item, and the measurement information includes: a measurement result of the first measurement item, measurement time corresponding to the measurement result, and information about a measurement position that corresponds to the measurement result. The information about the measurement position may include an identifier of an access network device in which the terminal is located and/or an identifier of a cell in which the terminal is located.

For example, the second network device may be an access network device or a core network device.

With reference to the third aspect or any implementation of the third aspect, in another possible implementation, the terminal performance measurement item includes at least one of the following measurement items: an uplink throughput, a downlink throughput, an uplink data packet delay, a downlink data packet delay, an uplink packet loss rate, or a downlink packet loss rate.

With reference to the third aspect or any implementation of the third aspect, in another possible implementation, the information about the AI model is included in a handover cause of a handover request.

With reference to the third aspect or any implementation of the third aspect, in another possible implementation, a service corresponding to the network policy includes at least one of the following: network energy saving, load balancing, mobility optimization, terminal movement path prediction, or terminal traffic prediction.

According to a fourth aspect, a communication method is provided. The method is applied to a second network device. The method may be performed by the second network device, or may be performed by a module or a unit (for example, a chip or a circuit) in the second network device. This is not limited. For beneficial effects of the fourth aspect or implementations of the fourth aspect, refer to beneficial effects of the third aspect or implementations of the third aspect. Details are not described again.

The method includes: receiving first information from a first network device, where the first information is for determining a first measurement item, and the first information includes first measurement configuration information for measuring the first measurement item; obtaining measurement information based on the first measurement item and the first measurement configuration information; and sending the measurement information to the first network device, where the measurement information is for optimizing an AI model on the first network device, the second network device is configured to execute a network policy obtained based on the AI model, and a second measurement item corresponding to the measurement information is included in the first measurement item.

With reference to the fourth aspect, in a possible implementation, obtaining the measurement information based on the first measurement item and the first measurement configuration information includes: determining the second measurement item and second measurement configuration information based on the first measurement item and the first measurement configuration information, where the second measurement configuration information is for measuring the second measurement item; and obtaining the measurement information based on the second measurement item and the second measurement configuration information.

With reference to the fourth aspect or any implementation of the fourth aspect, in another possible implementation, the first measurement configuration information includes at least one of the following information: a measurement time interval, measurement start time, or measurement termination information.

With reference to the fourth aspect or any implementation of the fourth aspect, in another possible implementation, the measurement termination information includes at least one of the following information: measurement duration, a measurement count, measurement end time, or a measurement termination condition.

With reference to the fourth aspect or any implementation of the fourth aspect, in another possible implementation, the measurement termination condition includes at least one of the following information: an identifier of an AI-triggered event or configuration information of an AI-triggered event.

With reference to the fourth aspect or any implementation of the fourth aspect, in another possible implementation, the measurement information includes a cause of measurement termination.

With reference to the fourth aspect or any implementation of the fourth aspect, in another possible implementation, the first information includes indication information of the first measurement item and the first measurement configuration information; or the first information includes information about the AI model and the first measurement configuration information.

With reference to the fourth aspect or any implementation of the fourth aspect, in another possible implementation, the first information further includes identifiers of one or more to-be-measured terminals.

With reference to the fourth aspect or any implementation of the fourth aspect, in another possible implementation, the information about the AI model includes an identifier of the AI model and/or information about a service corresponding to the AI model.

With reference to the fourth aspect or any implementation of the fourth aspect, in another possible implementation, the method further includes: sending second information to the first network device, where the second information indicates at least one of the second measurement item, a terminal that supports the second measurement item in the one or more to-be-measured terminals, or the second measurement configuration information.

With reference to the fourth aspect or any implementation of the fourth aspect, in another possible implementation, the method further includes: sending third information to the first network device, where the third information indicates retention duration of a terminal context.

With reference to the fourth aspect or any implementation of the fourth aspect, in another possible implementation, the method further includes: receiving fourth information from the first network device, where the fourth information is for requesting the retention duration.

With reference to the fourth aspect or any implementation of the fourth aspect, in another possible implementation, the first measurement item includes at least one of the following measurement items: a terminal performance measurement item, a terminal traffic measurement item, a terminal service measurement item, or a terminal movement path measurement item.

With reference to the fourth aspect or any implementation of the fourth aspect, in another possible implementation, when the first measurement item is a terminal-level measurement item, the measurement information obtained by the second network device may include one or more pieces of measurement information of the first measurement item, and the measurement information includes: a measurement result of the first measurement item, measurement time corresponding to the measurement result, and information about a measurement position that corresponds to the measurement result. The information about the measurement position may include an identifier of an access network device in which the terminal is located and/or an identifier of a cell in which the terminal is located.

For example, the second network device may be an access network device or a core network device.

With reference to the fourth aspect or any implementation of the fourth aspect, in another possible implementation, the terminal performance measurement item includes at least one of the following measurement items: an uplink throughput, a downlink throughput, an uplink data packet delay, a downlink data packet delay, an uplink packet loss rate, or a downlink packet loss rate.

With reference to the fourth aspect or any implementation of the fourth aspect, in another possible implementation, the information about the AI model is included in a handover cause of a handover request.

With reference to the fourth aspect or any implementation of the fourth aspect, in another possible implementation, a service corresponding to the network policy includes at least one of the following: network energy saving, load balancing, mobility optimization, terminal movement path prediction, or terminal traffic prediction.

According to a fifth aspect, a communication apparatus is provided. The apparatus is configured to perform the method provided in any one of the foregoing aspects or implementations of the foregoing aspects. Specifically, the apparatus may include a unit and/or a module, such as a processing unit and/or a communication unit, configured to perform the method provided in any one of the foregoing aspects or implementations of the foregoing aspects.

In an implementation, the apparatus is a first network device or a second network device. When the apparatus is the first network device or the second network device, the communication unit may be a transceiver, an input/output interface, or a communication interface; and the processing unit may be at least one processor. For example, the transceiver is a transceiver circuit. For example, the input/output interface is an input/output circuit.

In another implementation, the apparatus is a chip, a chip system, or a circuit used in the first network device or the second network device. When the apparatus is the chip, the chip system, or the circuit used in the first network device or the second network device, the communication unit may be an input/output interface, an interface circuit, an output circuit, an input circuit, a pin, a related circuit, or the like on the chip, the chip system, or the circuit; and the processing unit may be at least one processor, a processing circuit, a logic circuit, or the like.

According to a sixth aspect, a communication apparatus is provided. The apparatus includes: a memory, configured to store a program; and at least one processor, configured to execute a computer program or instructions stored in the memory, to perform the method provided in any one of the foregoing aspects or implementations of the foregoing aspects.

In an implementation, the apparatus is a first network device or a second network device.

In another implementation, the apparatus is a chip, a chip system, or a circuit used in the first network device or the second network device.

According to a seventh aspect, a communication apparatus is provided. The apparatus includes at least one processor and a communication interface. The at least one processor is configured to obtain, through the communication interface, a computer program or instructions stored in a memory, to perform the method provided in any one of the foregoing aspects or implementations of the foregoing aspects. The communication interface may be implemented by hardware or software.

In an implementation, the apparatus further includes the memory.

According to an eighth aspect, a processor is provided, and is configured to perform the method provided in the foregoing aspects.

Unless otherwise specified, or if operations such as sending and obtaining/receiving related to the processor do not conflict with actual functions or internal logic of the operations in related descriptions, the operations may be understood as operations such as output and receiving or input of the processor, or may be understood as sending and receiving operations performed by a radio frequency circuit and an antenna. This is not limited in this application.

According to a ninth aspect, a computer-readable storage medium is provided. The computer-readable medium stores program code to be executed by a device, to perform the method provided in any one of the foregoing aspects or implementations of the foregoing aspects.

According to a tenth aspect, a computer program product including instructions is provided. When the computer program product runs on a computer, the computer is caused to perform the method provided in any one of the foregoing aspects or implementations of the foregoing aspects.

According to an eleventh aspect, a chip is provided. The chip includes a processor and a communication interface. The processor reads, through the communication interface, instructions stored in a memory, to perform the method provided in any one of the foregoing aspects or implementations of the foregoing aspects. The communication interface may be implemented by hardware or software.

For example, in an implementation, the chip further includes the memory. The memory stores a computer program or the instructions. The processor is configured to execute the computer program or the instructions stored in the memory. When the computer program or the instructions are executed, the processor is configured to perform the method provided in any one of the foregoing aspects or implementations of the foregoing aspects.

When the method provided in this application is performed by a chip, a quantity of chips that implement the method in this application is not specifically limited in this application. For example, the method may be performed by one chip, or may be performed by two or more chips. In addition, when there are two or more chips that implement the method in this application, a chip manufacturer is not limited. The chips may be from a same manufacturer, or may be from different manufacturers.

According to a twelfth aspect, a communication system is provided, including a first network device and/or a second network device, where the first network device may perform the communication method according to the first aspect or the third aspect, and the second network device may perform the communication method according to the second aspect or the fourth aspect.

According to a thirteenth aspect, a computer program is provided. When the computer program runs on a computer, the method provided in any one of the foregoing aspects or implementations of the foregoing aspects is performed.

### BRIEF DESCRIPTION OF DRAWINGS

FIG. 1 is a diagram of an architecture of a communication system to which an embodiment of this application is applied;
FIG. 2 is a diagram of a base station using a central unit (central unit, CU)-distributed unit (distributed unit, DU) architecture;
FIG. 3 is a diagram of an AI application framework;
FIG. 4 is a schematic flowchart of a communication method 400 according to this application;
FIG. 5 is a schematic flowchart of a communication method 500 according to this application;
FIG. 6 is a schematic flowchart of a communication method 600 according to this application;
FIG. 7 is a schematic flowchart of a communication method 700 according to this application;
FIG. 8 is a diagram of a structure of an apparatus according to an embodiment of this application; and
FIG. 9 is another diagram of a structure of an apparatus according to an embodiment of this application.

### DESCRIPTION OF EMBODIMENTS

For ease of understanding of embodiments of this application, before embodiments of this application are described, the following descriptions are first provided.

In this application, "indicating" or "indication" may include a direct indication and an indirect indication, or "indicating" or "indication" may be an explicit indication and/or an implicit indication. For example, when a piece of information is described as indicating information **I,** the information may include directly indicating I or indirectly indicating I, but this does not mean that I is definitely carried in the information. For another example, the implicit indication may be based on a position and/or a resource used for transmission; and the explicit indication may be based on one or more parameters, and/or one or more indexes, and/or one or more bit patterns represented by the explicit indication.

In embodiments shown in the following descriptions, "first", "second", "third", "fourth", and various numbers are merely used for differentiation for ease of description, but are not used for limiting the scope of embodiments of this application. For example, "first", "second", "third", "fourth", and the various numbers are used for distinguishing between different information and different network devices.

Each aspect, embodiment, or feature is presented in this application with reference to a system including a plurality of devices, components, modules, and the like. It should be understood and appreciated that, each system may include another device, component, module, and the like, and/or may not include all devices, components, modules, and the like discussed with reference to accompanying drawings. In addition, a combination of these solutions may also be used.

In embodiments of this application, words such as "example", "for example", "such as", and "in an (another) example" are used for representing giving an example, an illustration, or a description. Any embodiment or design scheme described as an "example" in this application should not be construed as being more preferred or having more advantages than another embodiment or design scheme. Exactly, the term "example" is used for presenting a concept in a specific manner.

Terms "include", "comprise", "have", and variations thereof all mean "including but not limited to", unless otherwise specifically emphasized in another manner.

"At least one" means one or more, and "a plurality of" means two or more. "And/or" describes an association relationship between associated objects, and indicates that three relationships may exist. For example, A and/or B may indicate the following cases: Only A exists, both A and B exist, and only B exists, where A and B may be singular or plural. The character "/" generally indicates an "or" relationship between the associated objects. "At least one item (piece) of the following" or a similar expression thereof means any combination of these items, including a singular item (piece) or any combination of a plurality of items (pieces). For example, at least one item (piece) of a, b, and c may indicate: a, b, c, a and b, a and c, b and c, or a, b, and c, where a, b, and c may be singular or plural.

In embodiments of this application, related descriptions about sending a message, information, or data by a network element A to a network element B, and receiving, by the network element B, the message, the information, or the data from the network element A are intended to describe a specific network element to which the message, the information, or the data is to be sent. Whether the message, the information, or the data is directly sent or indirectly sent through another network element is not limited.

In embodiments of this application, descriptions such as "when...", "in a case that...", "provided that...", and "if..." all mean that a device performs corresponding processing in a specific objective case, but are not intended to limit time, do not require that the device has a determining action during implementation, and do not mean that there is another limitation.

In addition, a network architecture and a service scenario described in embodiments of this application are intended to describe technical solutions in embodiments of this application more clearly, and do not constitute a limitation on the technical solutions provided in embodiments of this application. A person of ordinary skill in the art may learn that, with evolution of the network architecture and emergence of new service scenarios, the technical solutions provided in embodiments of this application are also applicable to similar technical problems.

The technical solutions in embodiments of this application may be applied to various communication systems, such as a long term evolution (long term evolution, LTE) system, a frequency division duplex (frequency division duplex, FDD) system, a time division duplex (time division duplex, TDD) system, a worldwide interoperability for microwave access (worldwide interoperability for microwave access, WiMAX) communication system, a 5th generation (5th generation, 5G) system, for example, a new radio (new radio, NR) system, a 6th generation (6th generation, 6G) system, or a future communication system. The 5G communication system in this application includes a non-standalone (non-standalone, NSA) 5G mobile communication system or a standalone (standalone, SA) 5G communication system. Alternatively, the communication system may be a public land mobile network (public land mobile network, PLMN), an end-to-end (device-to-device, D2D) communication system, a machine-to-machine (machine-to-machine, M2M) communication system, an internet of things (Internet of things, IoT) communication system, a vehicle-to-everything (vehicle-to-everything, V2X) communication system, an uncrewed aerial vehicle (uncrewed aerial vehicle, UAV) communication system, or another communication system.

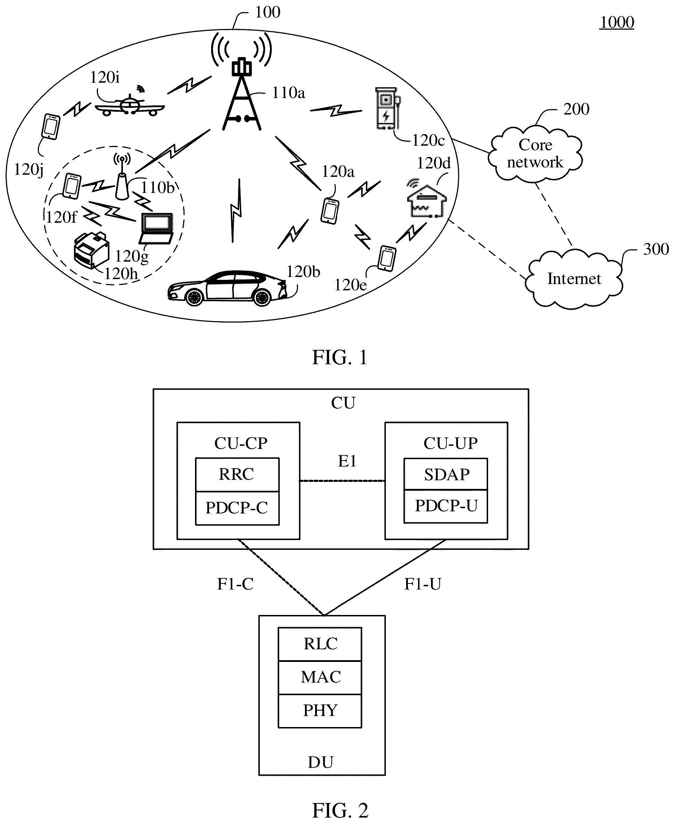

For example, FIG. 1 is a diagram of an architecture of a communication system 1000 to which an embodiment of this application is applied.

As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and a radio access network device may be independent and different physical devices, or functions of the core network device and logical functions of the radio access network device are integrated into a same physical device, or some functions of the core network device and some functions of the radio access network device are integrated into one physical device. Mutual connections between terminals and between radio access network devices may be implemented in a wired or wireless manner. FIG. 1 is only a diagram. The communication system may further include other network devices, for example, may further include a wireless relay device and a wireless backhaul device, which are not shown in FIG. 1.

The terminal in embodiments of this application may also be referred to as a terminal device, and may be a device having a wireless transceiver function. The terminal may be deployed on land, including an indoor or outdoor device, a handheld device, or a vehicle-mounted device; may be deployed on a water surface (for example, in a ship); or may be deployed in air (for example, on an airplane, a balloon, and a satellite). The terminal device may be user equipment (user equipment, UE). The UE includes a handheld device, a vehicle-mounted device, a wearable device, or a computing device having a wireless communication function. For example, the UE may be a mobile phone (mobile phone), a tablet computer, or a computer with a wireless transceiver function. The terminal may be used in various communication scenarios, such as unmanned driving, virtual reality (virtual reality, VR), augmented reality (augmented reality, AR), industrial control (industrial control), self-driving (self-driving), telemedicine (telemedicine), a smart grid (smart grid), smart furniture, a smart office, smart wearable, smart transportation, and a smart city (smart city). In embodiments of this application, an apparatus configured to implement a function of the terminal may be a terminal; or may be an apparatus, for example, a chip system, that can support the terminal in implementing the function, and the apparatus may be mounted in the terminal. In embodiments of this application, the chip system may be constituted by a chip, or may include a chip and another discrete component.

The radio access network device in embodiments of this application is also referred to as an access network device, for example, a base station (base station, BS). The BS may be a device that is deployed in a radio access network and that can perform wireless communication with a terminal. The radio access network device includes but is not limited to an evolved NodeB (evolved NodeB, eNodeB) and a transmission reception point (transmission reception point, TRP) in the foregoing communication system, a next generation NodeB (next generation NodeB, gNB) in a 5G mobile communication system, a next generation base station in a 6th generation (6th generation, 6G) mobile communication system, an access network device or a module of an access network device in an open radio access network ORAN (open RAN, ORAN) system, a base station in a future mobile communication system, and the like. Alternatively, the access network device may be a module or a unit that can implement some functions of the base station. For example, the access network device may be a CU, a DU, a CU-control plane (control plane, CP), a CU-user plane (user plane, UP), or a radio unit (radio unit, RU) described below. In the ORAN system, the CU may also be referred to as an open (open, O)-CU, the DU may also be referred to as an open O-DU, the CU-CP may also be referred to as an O-CU-CP, the CU-UP may also be referred to as an O-CU-UP, and the RU may also be referred to as an O-RU. The access network device may be a macro base station (for example, 110a in FIG. 1), a micro base station or an indoor base station (for example, 110b in FIG. 1), a relay node, a donor node, or a radio controller in a cloud radio access network (cloud radio access network, CRAN) scenario. Optionally, the access network device may alternatively be a server, a wearable device, a vehicle-mounted device, or the like. For example, an access network device in a V2X technology may be a road side unit (road side unit, RSU). A plurality of access network devices in the communication system may be base stations of a same type, or may be base stations of different types. The base station may communicate with the terminal, or may communicate with the terminal via a relay station. The terminal may communicate with a plurality of base stations in different access technologies. In embodiments of this application, an apparatus configured to implement a function of the radio access network device may be a radio access network device; or may be an apparatus, for example, a chip system, that can support the radio access network device in implementing the function, and the apparatus may be mounted in the radio access network device.

The core network 200 may include one or more core network devices. The core network device includes but is not limited to one or more of the following network elements: an authentication server function (authentication server function, AUSF), a unified data management (unified data management, UDM), a unified data repository (unified data repository, UDR), a network repository function (network repository function, NRF), a network exposure function (network exposure function, NEF), an application function (application function, AF), a policy control function (policy control function, PCF), an access and mobility management function (access and mobility management function, AMF), a session management function (session management function, SMF), a user plane function (user plane function, UPF), a binding support function (binding support function, BSF), and a network data analytics function (network data analytics function, NWDAF).

FIG. 2 is a diagram of a base station using a CU-DU architecture. The CU and the DU may be understood as division of the base station from a perspective of logical functions. The CU and the DU may be physically separated or may be deployed together. A plurality of DUs may share one CU. One DU may alternatively be connected to a plurality of CUs (not shown in the figure). The CU and the DU may be connected through an interface. For example, the CU and the DU may be connected through an F1 interface.

Division may be performed on the CU and the DU based on protocol layers of a wireless network. For example, a possible division manner is that the CU is configured to perform functions of a radio resource control (radio resource control, RRC) layer, a service data adaptation protocol (service data adaptation protocol, SDAP) layer, and a packet data convergence protocol (packet data convergence protocol, PDCP) layer, and the DU is configured to perform functions of a radio link control (radio link control, RLC) layer, a medium access control (medium access control, MAC) layer, a physical (physical) layer, and the like. It may be understood that, processing function division of the CU and the DU based on the protocol layers is merely an example, and division may alternatively be performed in other manners. For example, the CU or the DU may have functions of more protocol layers through division. For example, the CU or the DU may alternatively have some processing functions of the protocol layers through division. In a design, some functions of the RLC layer and functions of a protocol layer above the RLC layer are set on the CU, and remaining functions of the RLC layer and functions of a protocol layer below the RLC layer are set on the DU. In another design, the functions of the CU or the DU may alternatively be divided based on a service type or another system requirement, for example, divided based on a delay. A function whose processing time needs to satisfy a delay requirement is set on the DU, and a function whose processing time does not need to satisfy the delay requirement is set on the CU. In another design, the CU may alternatively have one or more functions of the core network. One or more CUs may be arranged in a centralized manner or may be arranged separately. For example, the CUs may be arranged on a network side for ease of centralized management. The DU may have a plurality of radio frequency functions, or the radio frequency functions may be set remotely.

Functions of the CU may be implemented by one entity or by different entities. For example, the functions of the CU may be further divided. For example, the CP and the UP are separated, namely, a control plane (CU-CP) of the CU and a user plane (CU-UP) of the CU. For example, the CU-CP and the CU-UP may be implemented by different functional entities, and are connected through an E1 interface. The CU-CP and the CU-UP may be coupled to the DU, to jointly complete functions of the base station. The control plane CU-CP of the CU further includes an architecture for further division, that is, an existing CU-CP is further divided into a CU-CP 1 and a CU-CP 2. The CU-CP 1 includes various radio resource management functions, and the CU-CP 2 includes only an RRC function and a PDCP-C function (namely, a basic function of control plane signaling at the PDCP layer).

It should be understood that, the network architecture shown above is merely an example for description, and a network architecture applicable to embodiments of this application is not limited thereto. Any network architecture that can implement functions of the foregoing network elements is applicable to embodiments of this application.

The network device in this application, for example, a first network device and a second network device, may be the radio access network device or the core network device shown in FIG. 1.

AI is a technology in which complex computation is performed by simulating the human brain. With improvement of data storage and computing capabilities, AI is increasingly applied. The 3rd generation partnership project (the 3rd generation partnership project, 3GPP) proposes to apply AI to a wireless communication system, to improve network performance and user experience through intelligent data collection and analysis.

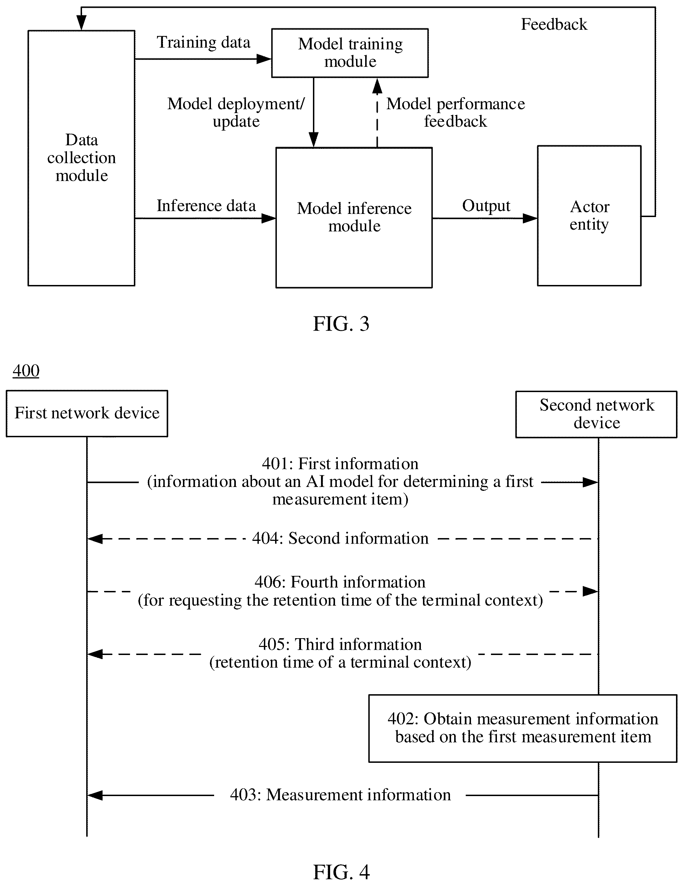

FIG. 3 is a diagram of an AI application framework.

As shown in FIG. 3, the AI application framework includes a data collection (data collection) module, a model training (model training) module, a model inference (model inference) module, and an actor (actor) entity. The network device, the terminal, or another management entity may input data into the data collection module, and the data collection module may be used as a database for AI model training and data analysis and inference. The model training module analyzes training data output by the data collection module, to provide an optimal AI model, and deploys an obtained AI model on the model inference module. Based on inference data output by the data collection module, the model inference module provides appropriate prediction on network running based on the AI model (obtained by the model training module through training), and feeds back performance data of the AI model to the model training module. Subsequently, the model training module continues to train the model based on the performance data that is fed back, and notifies the model inference module of an updated AI model. Alternatively, the model inference module instructs a network to make policy adjustment based on inference data output by the data collection module and the AI model. Related policy adjustment is planned by the actor entity in a unified manner, and an adjusted policy is sent to a plurality of network entities for running. In addition, after a related policy is applied, specific performance of the network is fed back to the data collection module for storage.

The AI model may be located in an operations, administration and maintenance (operations, administration and maintenance, OAM), or may be located in an access network device (for example, the radio access network device shown in FIG. 1), or may be located in a core network device (for example, the core network device shown in FIG. 1), or may be located in a terminal (for example, the terminal shown in FIG. 1), or may be located at an AI control layer (AI control layer, AIC) of a separate network element entity.

Application of AI on a radio access network side includes but is not limited to the following use cases (use cases): network energy saving (network energy saving), load balancing (load balancing), or mobility optimization (mobility optimization), and another use case. The following describes a basic principle of the foregoing use cases.

Network energy saving scenario: The access network device collects information about load, energy consumption, and energy efficiency of the access network device and a neighboring cell, movement path information of a terminal, a measurement report of the terminal, and other information, predicts a load trend of the access network device, and with reference to a cell usage, a key performance indicator (key performance indicator, KPI) requirement, and the like, takes an energy saving measure in a timely and appropriate manner without affecting network coverage and user access.

Load balancing scenario: The access network device collects information about load, energy consumption, and energy efficiency of the access network device and a neighboring cell, movement path information of a terminal, a measurement report of the terminal, and other information; predicts future load of the access network device; and appropriately selects, with reference to cell usage, KPI requirements, and the like, some terminals to hand over the terminals to the neighboring cell, or accepts a terminal that is handed over from the neighboring cell due to load balancing. This ensures balanced load levels across access network devices within the entire network, reducing occurrences of overloaded access network devices affecting normal services while avoiding situations where some access network devices remains underutilized.

Mobility optimization scenario: The access network device collects historical movement path information of a terminal, and predicts a movement path of the terminal with reference to a measurement report of the terminal. Based on the predicted movement path, whether the terminal device is handed over to a cell is determined in advance; and a handover configuration is delivered in advance, and a target cell is notified to prepare an access resource, to reduce a delay of the terminal in a handover process, and reduce a probability of a handover or an access failure.

In these use cases, the AI model may be deployed on the network device, a network policy applied to the wireless communication system may be obtained based on the AI model, and a corresponding use case may be implemented by executing the obtained network policy. In this way, a better network policy can be obtained by optimizing the AI model on the network device, to improve performance of the wireless communication system. Therefore, how to optimize the AI model becomes a problem that urgently needs to be resolved.

For the foregoing problem, this application provides a communication method and a communication apparatus, to help optimize the AI model on the network device.

The following describes the communication method provided in this application.

FIG. 4 is a schematic flowchart of a communication method 400 according to this application.

The method 400 may be performed by a first network device and a second network device, or may be performed by modules or units (for example, a circuit and a chip) in the first network device and the second network device, which are collectively referred to as the first network device and the second network device below. An AI model is deployed on the first network device, the first network device may obtain a network policy based on the AI model, and the second network device may execute the network policy obtained based on the AI model.

That the second network device executes the network policy obtained based on the AI model may be understood as follows: The second network device is involved in a process of executing the network policy obtained based on the AI model. After execution of the network policy is completed, the second network device may provide some information to optimize the AI model. For example, a service corresponding to the AI model on the first network device is load balancing. The first network device obtains, based on the AI model, a network policy related to the load balancing, and a terminal is handed over from the first network device to the second network device based on the network policy. Then, the second network device may obtain and feed back some information of the terminal, such as an uplink/downlink packet loss rate or an uplink/downlink throughput of the terminal, to optimize the AI model.

The method 400 includes at least some of the following content.

Step 401: The first network device sends first information to the second network device, or the second network device receives first information from the first network device.

The first information includes information about the AI model, the information about the AI model is for determining a first measurement item, and measurement information corresponding to the first measurement item may be for optimizing the AI model. In other words, the first network device may request, from the second network device in an implicit manner, the measurement information required for optimizing the AI model. The first measurement item may include one or more measurement items.

In a possible implementation, the information about the AI model may include an identifier of the AI model (AI model ID) and/or information about a service corresponding to the AI model. The service corresponding to the AI model may also be described as an AI use case corresponding to the AI model, and the information about the service corresponding to the AI model may be an identifier of the service corresponding to the AI model.

The service (or the use case) corresponding to the AI model (or the network policy) may be any one of the following: network energy saving, load balancing, mobility optimization, terminal movement path prediction, or terminal traffic prediction.

A granularity of the first measurement item is not limited in this embodiment of this application. For example, the first measurement item may be a terminal-level measurement item (or a measurement item at a terminal granularity). For another example, the first measurement item may be a cell-level measurement item (or a measurement item at a cell granularity). For another example, the first measurement item includes measurement items of different granularities. For example, some first measurement items are terminal-level measurement items, and the other first measurement items are cell-level measurement items.

When the first measurement item is the terminal-level measurement item, the first information may further include identifiers of one or more to-be-measured terminals. The identifier of the terminal may include at least one of the following identifiers: a next generation application protocol (next generation application protocol, NGAP) ID of the terminal, a next generation radio access network node UE XnAP identifier (NG-RAN node UE XnAP ID), a subscription permanent identifier (subscription permanent identifier, SUPI) of the terminal, a subscription concealed identifier (subscription concealed identifier, SUCI), a generic public subscription identifier (generic public subscription identifier, GPSI), a permanent equipment identifier (permanent equipment identifier, PEI) or a mobile subscriber international ISDN/PSTN number (mobile subscriber international ISDN/PSTN number, MSISDN), where an ISDN is an integrated service digital network (integrated service digital network), and a PSTN is a public switched telephone network (public switched telephone network). The MSISDN may be understood as an identity that can be disclosed externally by a terminal, for example, a phone number of the terminal.

Sending of the first information may be based on a new procedure between network devices, or may be based on an existing procedure (for example, a handover procedure) between network devices. In an example of the handover procedure, the first network device may be a source access network device, the second network device may be a target access network device, and the first information may be included in a handover request (handover request) message, a sequence number (sequence number, SN) status transfer (SN Status Transfer) message, or the like. For example, when the first information is included in the handover request message, the first information may be included in a handover cause of the handover request message, and the handover cause may be an information element. For example, a cause value may be added to the handover cause to indicate an AI-related handover cause. For example, a cause value #1 is added, and the cause value #1 indicates the network energy saving. When the handover request message carries the cause value #1, it indicates that the terminal is handed over to the second network device for a cause of the network energy saving.

Step 402: The second network device obtains measurement information based on the first measurement item.

The measurement information may be for optimizing the AI model on the first network device.

Specifically, after the second network device receives the first information, the second network device determines the first measurement item based on the information about the AI model in the first information, and then obtains the measurement information based on the first measurement item. The measurement information may include various types of information related to measurement of the first measurement item. For example, the measurement information includes a measurement result obtained by measuring the first measurement item. For another example, the measurement information includes a measurement result obtained by measuring the first measurement item, measurement time corresponding to the measurement result, and information about a measurement position that corresponds to the measurement result. The measurement information may also be referred to as measurement data.

For example, the first measurement item includes at least one of the following measurement items: a terminal performance measurement item, a terminal traffic measurement item, a terminal service measurement item, or a terminal movement path measurement item. The terminal performance measurement item includes at least one of the following measurement items: an uplink throughput, a downlink throughput, an uplink data packet delay, a downlink data packet delay, an uplink packet loss rate, or a downlink packet loss rate.

Information about different AI models corresponds to different first measurement items.

For example, if the information about the AI model in the first information is an identifier of a network energy saving service or an identifier of a network energy saving model, the second network device determines that the first measurement item includes the terminal service measurement item and the terminal performance measurement item.

For another example, if the information about the AI model in the first information is an identifier of a load balancing service or an identifier of a load balancing model, the second network device determines that the first measurement item includes the terminal performance measurement item and the terminal movement path measurement item.

For another example, if the information about the AI model in the first information is an identifier of a mobility optimization service or an identifier of a mobility optimization model, the second network device determines that the first measurement item includes the terminal performance measurement item and the terminal movement path measurement item.

For another example, if the information about the AI model in the first information is an identifier of a terminal movement path service or an identifier of a terminal movement path model, the second network device determines that the first measurement item includes the terminal movement path measurement item.

For another example, if the information about the AI model in the first information is an identifier of a terminal traffic prediction service or an identifier of a terminal traffic prediction model, the second network device determines that the first measurement item may include the terminal traffic measurement item and/or the terminal performance measurement item.

In a possible implementation, that the second network device determines the first measurement item based on the information about the AI model in the first information includes: The second network device determines the first measurement item based on a correspondence between the information about the AI model in the first information and the first measurement item. The correspondence herein may be pre-configured in the second network device.

For example, a correspondence list may be pre-configured in the second network device, and each entry in the correspondence list indicates information about an AI model and a measurement item corresponding to the AI model. Table 1 shows a form of the correspondence list.

**Table 1**

| Information about an AI model (for example, an identifier of the AI model or an identifier of a service corresponding to the AI model) | Measurement item |
|---|---|
| Information 1 | Measurement item 1 |
| Information 2 | Measurement item 2 |
| ... | ... |
| Information n | Measurement item 3 |

In a possible implementation, when the first measurement item is the terminal-level measurement item, the measurement information obtained by the second network device may include one or more pieces of measurement information of the first measurement item. For example, the measurement information includes the measurement result of the first measurement item, the measurement time corresponding to the measurement result, and the information about the measurement position that corresponds to the measurement result. The information about the measurement position may include an identifier of an access network device in which the terminal is located and/or an identifier of a cell in which the terminal is located.

For example, when the first measurement item includes the terminal movement path measurement item, the measurement information obtained by the second network device may include the identifier of the access network device in which the terminal is located, the identifier of the cell in which the terminal is located, and time when the terminal is in a service range of the access network device. The identifier of the access network device in which the terminal is located and the identifier of the cell in which the terminal is located are a measurement result of the terminal movement path measurement item. The time when the terminal is in the service range of the access network device may be time when the terminal arrives at the service range of the access network device, time when the terminal leaves the service range of the access network device, or a time period in which the terminal is in the service range of the access network device.

For another example, when the first measurement item includes the terminal traffic measurement item, the measurement information obtained by the second network device may include a measurement result of terminal traffic, the identifier of the access network device in which the terminal is located, the identifier of the cell in which the terminal is located, and measurement time corresponding to the measurement result.

For example, the second network device may be an access network device or a core network device. When the second network device is the core network device, the measurement information may further include a connection status of the terminal. The core network device is, for example, an AMF.

It should be noted that, the method 400 further includes a network policy execution process, which is not shown in FIG. 4. Step 402 may be performed after the execution of the network policy is completed, and the network policy is obtained by the first network device based on the AI model. For example, based on the network policy, the terminal is handed over from the first network device to the second network device, and then the second network device may perform step 402.

Step 403: The second network device sends the measurement information to the first network device, or the first network device receives the measurement information from the second network device. In this way, the first network device may optimize the AI model based on the received measurement information. Sending of the measurement information may be based on a new procedure between network devices. Alternatively, sending of the measurement information may be based on an existing procedure between network devices. For example, the measurement information may be included in an access and mobility indication (access and mobility indication) sent by the second network device to the first network device.

According to the method 400, the first network device may implicitly indicate, based on the information about the AI model, the measurement information required for optimizing the AI model; and the second network device may determine, based on the information about the AI model, measurement information that needs to be obtained, and provide the obtained measurement information for the first network device. In this way, the first network device can obtain, from the second network device, the measurement information for optimizing the AI model. This helps optimize the AI model. Because there are many types of measurement information, AI model-based information implicitly indicates the measurement information required for optimizing the AI model. This helps reduce signaling overheads. In addition, because measurement information required for different AI models may be different, according to the method, a case in which the second network device provides, for the first network device, measurement information that does not satisfy a requirement of the AI model can be avoided. Therefore, the method helps improve accuracy of optimizing the AI model.

In some other implementations of the method 400, the first information may further include first measurement configuration information. The first measurement configuration information is for measuring the first measurement item, or the first measurement configuration information indicates a configuration parameter used for measuring the first measurement item. The first measurement configuration information may include at least one of the following information: a measurement time interval, measurement start time, or measurement termination information. The measurement termination information may include at least one of the following information: measurement duration, a measurement count, measurement end time, or a measurement termination condition. There may be one or more measurement termination conditions.

For example, the measurement termination information may directly include the measurement termination condition. For example, an uplink data packet delay of the terminal is greater than a threshold, predicted load is to be greater than a threshold, current load is to be greater than a threshold, or a current uplink data packet loss of the terminal is greater than a threshold.

For example, the measurement termination information may include information that indicates a measurement condition. For example, the measurement termination information may include an identifier of an AI-triggered event and/or configuration information of an AI-triggered event. The AI-triggered event may be that, for example, predicted load is to be greater than a corresponding threshold, current load is to be greater than a specific threshold, or a current uplink data packet loss of UE is greater than a threshold.

For example, the first measurement configuration information may include measurement configuration information of each measurement item in the first measurement item, and measurement configuration information of different measurement items may be the same or different.

When the first information includes the first measurement configuration information, step 402 specifically includes: A second access network device obtains the measurement information based on the first measurement item and the first measurement configuration information. When the second network device measures the first measurement item, step 403 specifically includes: The second network device sends the measurement information based on the first measurement configuration information.

For example, when the first measurement configuration information includes the measurement time interval, the measurement start time, and the measurement termination information, that the second network device sends the measurement information based on the first measurement configuration information includes: After collecting the measurement information based on the measurement time interval, the measurement start time, and the measurement termination information in the first measurement configuration information, the second network device sends the measurement information to the first network device at a time; or starting from the measurement start time in the first measurement configuration information, the second network device obtains measurement information and sends the obtained measurement information for a plurality of times based on the measurement time interval, until the measurement termination information is satisfied.

For example, when the first measurement configuration information includes the measurement time interval and the measurement termination information, that the second network device sends the measurement information based on the first measurement configuration information includes: After receiving the first measurement information, the second network device collects the measurement information based on the measurement time interval and the measurement termination information in the first measurement configuration information, and sends the measurement information to the first network device at a time after collection is completed; or after receiving the first measurement information, the second network device obtains measurement information and sends the obtained measurement information for a plurality of times based on the measurement time interval, until the measurement termination information is satisfied.

For example, when the first measurement configuration information includes the measurement start time, that the second network device sends the measurement information based on the first measurement configuration information includes: The second network device collects the measurement information once based on the measurement start time in the first measurement configuration information, and sends the measurement information to the first network device.

In some other implementations of the method 400, the method 400 further includes: The second network device determines second measurement configuration information based on the first information, where the second measurement configuration information is measurement configuration information actually used for measuring the first measurement item. When the second network device determines the second measurement configuration information, step 402 specifically includes: The second network device obtains the measurement information based on the first measurement item and the second measurement configuration information. When the second network device measures the first measurement item, step 403 specifically includes: The second network device sends the measurement information based on the second measurement configuration information. For a manner in which the second network device sends the measurement information based on the second measurement configuration information, refer to a manner in which the second network device sends the measurement information based on the first measurement configuration information.

When the first information includes the first measurement configuration information, that the second network device determines the second measurement configuration information based on the first information includes: The second network device determines the second measurement configuration information based on the first measurement configuration information. For example, after receiving the first measurement configuration information, the second network device may determine, from the first measurement configuration information, measurement configuration information supported by the second network device as the second measurement configuration information. The second measurement configuration information obtained in this manner may be the same as or different from the first measurement configuration information.

For example, that the second network device determines the second measurement configuration information based on the first information includes: The second network device determines the second measurement configuration information based on a correspondence between the information about the AI model in the first information and the second measurement configuration information. The correspondence may be pre-configured in the second network device.

For example, a correspondence list may be pre-configured in the second network device, and each entry in the correspondence list indicates information about an AI model and a measurement item and measurement configuration information that correspond to the AI model. Table 2 shows a form of the correspondence list.

**Table 2**

| Information about an AI model (for example, an identifier of the AI model or an identifier of a service corresponding to the AI model) | Measurement item | Measurement configuration information |
|---|---|---|
| Information 1 | Measurement item 1 | Measurement configuration information 1 |
| Information 2 | Measurement item 2 | Measurement configuration information 2 |
| ... | ... | ... |
| Information n | Measurement item 3 | Measurement configuration information 3 |

Certainly, a correspondence between the information about the AI model and measurement configuration information of the AI model may alternatively be stored in a separate table. This is not limited in this embodiment of this application.

It should be noted that, when the first information includes the measurement termination condition, the second network device may further indicate a cause of measurement termination when sending the measurement information for a last time.

In some other implementations of the method 400, when the first information includes the identifiers of the one or more to-be-measured terminals, the method 400 further includes: The second network device determines a terminal that supports the first measurement item in the one or more to-be-measured terminals (which is referred to as a supporting terminal for short). In this case, the second network device obtains measurement information of the supporting terminal.

In some other implementations of the method 400, the method 400 further includes step 404: The second network device sends second information to the first network device, or the first network device receives second information from the second network device. The second information indicates at least one of the first measurement item, the supporting terminal, or the second measurement configuration information. In this way, the first network device may determine, with reference to the second information, whether to optimize the AI model by using the measurement information sent by the second network device.

For example, the second information includes the first measurement item. The first network device determines whether the first measurement item determined by the second network device is a measurement item corresponding to the measurement information required for optimizing the AI model, and when the first measurement item is the measurement item corresponding to the measurement information required for optimizing the AI model, the first network device optimizes the AI model by using the measurement information sent by the second network device.

For example, the second information includes an identifier of the supporting terminal. The first network device determines whether a quantity of supporting terminals that are determined by the second network device satisfies a requirement for optimizing the AI model, and when the quantity of supporting terminals satisfies the requirement for optimizing the AI model, the first network device optimizes the AI model by using the measurement information sent by the second network device.

For example, the second information includes the second measurement configuration information. The first network device determines whether the second measurement configuration information determined by the second network device satisfies a requirement for optimizing the AI model, and when the second measurement configuration information satisfies the requirement for optimizing the AI model, the first network device optimizes the AI model by using the measurement information sent by the second network device.

Sending of the second information may be based on a new procedure between network devices, or may be based on an existing procedure (for example, a handover procedure) between network devices. In an example of the handover procedure, the second information may be included in a handover request acknowledgment (handover request acknowledgment) message, a handover success (handover success) message, a UE context release (UE context release) message, or the like.

In some other implementations of the method 400, the method 400 further includes step 405: The second network device sends third information to the first network device, or the first network device receives third information from the second network device, where the third information indicates retention time of a terminal context. The retention time of the terminal context may alternatively be release time of the terminal context. Because the second network device needs specific duration to obtain and perform transmission of the measurement information, the second network device may indicate the retention time of the terminal context to the first network device, to avoid a case in which due to premature release of the terminal context by the first network device, the first network device fails to identify the measurement information sent by the second network device, and then fails to optimize the AI model.

For example, the third information may include retention time that is of the terminal context and that is estimated by the second network device. The third information may not include the identifier of the terminal, to indicate that the retention time is applicable to a plurality of to-be-measured terminals.

For example, the third information may include the identifier of the terminal and retention time that is of a terminal context of the terminal and that is estimated by the second network device. The retention time is applicable to a terminal corresponding to the identifier of the terminal.

Sending of the third information may be based on a new procedure between network devices, or may be based on an existing procedure (for example, a handover procedure) between network devices. In an example of the handover procedure, the third information may be included in a handover request acknowledgment message, a handover success message, a UE context release message, or the like.

It should be noted that, the third information and the second information may be sent to the first network device based on a same message, or may be sent to the first network device based on different messages. This is not limited. When the third information and the second information are sent based on the different messages, a sequence of step 404 and step 405 is not limited.

In some other implementations of the method 400, before step 405, the method 400 further includes step 406: The first network device sends fourth information to the second network device, or the second network device receives fourth information from the first network device, where the fourth information is for requesting the retention time of the terminal context. To be specific, the second network device may send the retention time of the terminal context to the first network device based on a request of the first network device.

For example, the fourth information may include the identifiers of the one or more to-be-measured terminals.

Sending of the fourth information may be based on a new procedure between network devices, or may be based on an existing procedure (for example, a handover procedure) between network devices. In an example of the handover procedure, the fourth information may be included in a handover request message.

It should be noted that, the fourth information and the first information may be sent to the second network device based on a same message, or may be sent to the second network device based on different messages. This is not limited.

It should be further noted that, when the second network device does not indicate retention duration of the terminal context to the first network device, the first network device may automatically select time for retaining the terminal context.

It should be further noted that, a manner in which the second network device obtains the measurement information is not limited in this application. The measurement information may be received by the second network device from another communication device (for example, a terminal), or may be measured by the second network device. For example, the second network device measures the first measurement item based on measurement configuration information (for example, the first measurement configuration information or the second measurement configuration information) to obtain the measurement information. For another example, the second network device configures a terminal based on the first measurement item and measurement configuration information (for example, the first measurement configuration information or the second measurement configuration information); and then the terminal measures the first measurement item based on the measurement configuration information to obtain the measurement information, and reports the measurement information to the second network device via a measurement report. For another example, the second network device measures some first measurement items based on measurement configuration information (for example, the first measurement configuration information or the second measurement configuration information) to obtain the measurement information, and configures a terminal to measure the other first measurement items and receives the measurement information reported by the terminal.

It should be further noted that, in the method 400, a sequence of performing step 401, step 404, step 405, and step 406 and executing the network policy obtained based on the AI model is not limited. For example, step 401, step 404, step 405, and step 406 may be performed first, and then the network policy is executed. For another example, the network policy may be executed first, and then step 401, step 404, step 405, and step 406 are performed. For still another example, step 401, step 404, step 405, and step 406 may be performed when the network policy is executed.

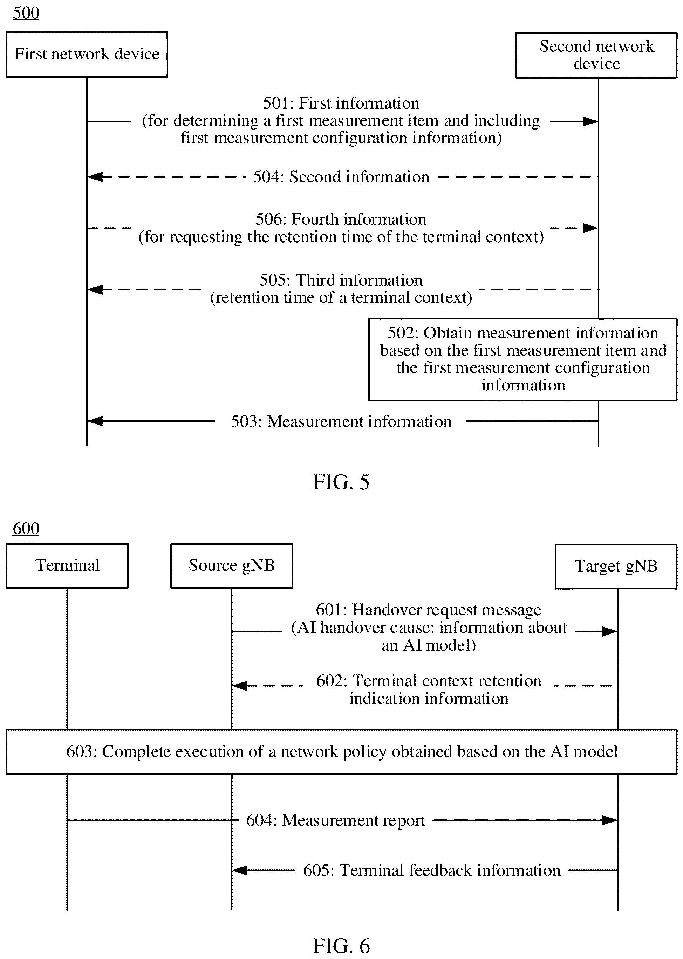

The foregoing describes a communication method provided in this application with reference to FIG. 4. The following describes another communication method provided in this application with reference to FIG. 5. Embodiments shown in FIG. 5 and FIG. 4 may be mutually referenced, cited, or combined. In addition, content described in the embodiment shown in FIG. 4 is not described in detail again.

FIG. 5 is a schematic flowchart of a communication method 500 according to this application.

The method 500 may be performed by a first network device and a second network device, or may be performed by modules or units (for example, a circuit and a chip) in the first network device and the second network device, which are collectively referred to as the first network device and the second network device below. An AI model is deployed on the first network device, the first network device may obtain a network policy based on the AI model, and the second network device may execute the network policy obtained based on the AI model. For descriptions of "the second network device executes the network policy obtained based on the AI model", refer to the method 400. Details are not described again.

The method 500 includes at least some of the following content.

Step 501: The first network device sends first information to the second network device, or the second network device receives first information from the first network device.

The first information is for determining a first measurement item, the first information includes first measurement configuration information, and the first measurement configuration information is for measuring the first measurement item. The first measurement item may include one or more measurement items.

The first measurement configuration information may include at least one of the following information: a measurement time interval, measurement start time, or measurement termination information. The measurement termination information may include at least one of the following information: measurement duration, a measurement count, measurement end time, or a measurement termination condition. There may be one or more measurement termination conditions. For descriptions of the measurement termination information, refer to FIG. 4.

For example, the first measurement configuration information may include measurement configuration information of each measurement item in the first measurement item, and measurement configuration information of different measurement items may be the same or different.

The first measurement item may include at least one of the following measurement items: a terminal performance measurement item, a terminal traffic measurement item, a terminal service measurement item, or a terminal movement path measurement item. The terminal performance measurement item includes at least one of the following measurement items: an uplink throughput, a downlink throughput, an uplink data packet delay, a downlink data packet delay, an uplink packet loss rate, or a downlink packet loss rate.

A granularity of the first measurement item is not limited in this embodiment of this application. For example, the first measurement item may be a terminal-level measurement item (or a measurement item at a terminal granularity). For another example, the first measurement item may be a cell-level measurement item (or a measurement item at a cell granularity). For still another example, the first measurement item includes measurement items at different granularities. For example, some first measurement items are terminal-level measurement items, and the other first measurement items are cell-level measurement items. When the first measurement item is the terminal-level measurement item, the first information may further include identifiers of one or more to-be-measured terminals. For descriptions of the identifier of the terminal, refer to step 401.

In a possible implementation, the first information includes indication information of the first measurement item and the first measurement configuration information. In other words, the first network device may indicate, to the second network device in an explicit manner, measurement information required for optimizing the AI model and corresponding measurement configuration information. In this manner, the first network device may more accurately indicate, to the second network device, the measurement information for optimizing the AI model.

For example, different measurement items may correspond to different bits in the first information. When a value of a specific bit is 1, it indicates that a measurement item corresponding to the bit is requested. When a value of a specific bit is 0, it indicates that a measurement item corresponding to the bit is not requested. In this way, the first measurement item requested by the first network device may be indicated by setting a value of a bit that corresponds to the measurement item. For example, when the first network device requests to update a local terminal movement path prediction AI model, a bit corresponding to the terminal movement path measurement item is 1.

For example, in a specific implementation of the first information, the first information carries a terminal identifier list information element, a measurement item request indication information element, and a measurement configuration request indication information element. The terminal identifier list information element includes the identifiers of the one or more to-be-measured terminals, the measurement item request indication information element indicates the first measurement item, and the measurement configuration request indication information element indicates the first measurement configuration information.

For example, different measurement items may alternatively correspond to different information elements in the first information. When the first information carries a specific information element, it indicates that a measurement item corresponding to the information element is requested. When the first information does not carry a specific information element, it indicates that a measurement item corresponding to the information element is not requested, and a value of the information element is not limited. In this way, the first measurement item requested by the first network device may be indicated by including an information element corresponding to the first measurement item in the first information. For example, when the first network device requests to update a local terminal movement path prediction AI model, the first information carries an information element corresponding to the terminal movement path measurement item.

In another possible implementation, the first information includes information about the AI model and the first measurement configuration information. In other words, the first network device may request, from the second network device in an implicit manner, the measurement information required for optimizing the AI model. For the information about the AI model, refer to step 401. Because there are many types of measurement information, AI model-based information implicitly indicates the measurement information required for optimizing the AI model. This helps reduce signaling overheads.

Sending of the first information may be based on a new procedure between network devices, or may be based on an existing procedure (for example, a handover procedure) between network devices. In an example of the handover procedure, the first information may be included in a handover request message, SN status transfer, or the like. For example, when the first information includes the information about the AI model and the first measurement configuration information, and the first information is included in the handover request message, the information about the AI model may be included in a handover cause of the handover request message, and the handover cause may be an information element. For example, a cause value may be added to the handover cause to indicate an Al-related handover cause. For example, a cause value #1 is added, and the cause value #1 indicates network energy saving. When the handover request message carries the cause value #1, it indicates that the terminal is handed over to the second network device for a cause of the network energy saving.

Step 502: The second network device obtains measurement information based on the first measurement item and the first measurement configuration information.

The measurement information may be for optimizing the AI model on the first network device. The measurement information may include a measurement result obtained by measuring a measurement item (for example, the first measurement item or a second measurement item mentioned below). For another example, the measurement information includes a measurement result obtained by measuring a measurement item (for example, the first measurement item or a second measurement item mentioned below), measurement time corresponding to the measurement result, and information about a measurement position that corresponds to the measurement result. The measurement information may also be referred to as measurement data.

Specifically, after the second network device receives the first information, the second network device determines the first measurement item and the first measurement configuration information based on the first information, and then the second network device obtains the measurement information based on the first measurement item and the first measurement configuration information.

In a possible implementation, when the first information includes the indication information of the first measurement item and the first measurement configuration information, that the second network device determines the first measurement item and the first measurement configuration information based on the first information includes: The second network device determines the first measurement item based on the indication information of the first measurement item in the first information, and obtains the first measurement configuration information in the first information.

In another possible implementation, when the first information includes the information about the AI model and the first measurement configuration information, that the second network device determines the first measurement item and the first measurement configuration information based on the first information includes: The second network device determines the first measurement item based on the information about the AI model in the first information, and obtains the first measurement configuration information in the first information. For a manner in which the second network device determines the first measurement item based on the information about the AI model in the first information, refer to step 402.

In a possible implementation, that the second network device obtains the measurement information based on the first measurement item and the first measurement configuration information includes: The second network device determines the second measurement item and second measurement configuration information based on the first measurement item and the first measurement configuration information, and then obtains the measurement information based on the second measurement item and the second measurement configuration information, where the second measurement item is included in the first measurement item, and the second measurement configuration information is for measuring the second measurement item. This may be understood as that, the first measurement item and the first measurement configuration information are a measurement item and measurement configuration information that are expected by the first network device, and the second measurement item and the second measurement configuration information are a measurement item actually measured by the second network device and measurement configuration information actually used by the second network device. To be specific, after obtaining the first measurement item and the first measurement configuration information that are expected by the first network device, the second network device may determine the actually measured second measurement item and the actually used second measurement configuration information. For example, after receiving the first measurement item and the first measurement configuration information, the second network device may determine, from the first measurement item, that the second network device may obtain measurement information of the second measurement item, and may determine, from the first measurement configuration information, measurement configuration information supported by the second network device as the second measurement configuration information. The first measurement configuration information may be the same as or different from the second measurement configuration information.

In a possible implementation, when a measurement item (for example, the first measurement item or the second measurement item) is a terminal-level measurement item, the measurement information obtained by the second network device may include one or more pieces of measurement information of the measurement item. For example, the measurement information includes: a measurement result of the measurement item, measurement time corresponding to the measurement result, and information about a measurement position that corresponds to the measurement result. The information about the measurement position may include an identifier of an access network device in which the terminal is located and/or an identifier of a cell in which the terminal is located.

For example, when the measurement item includes the terminal movement path measurement item, the measurement information includes the identifier of the access network device in which the terminal is located, the identifier of the cell in which the terminal is located, and time when the terminal is in a service range of the access network device. The identifier of the access network device in which the terminal is located and the identifier of the cell in which the terminal is located are a measurement result of the terminal movement path measurement item. The time when the terminal is in the service range of the access network device may be time when the terminal arrives at the service range of the access network device, time when the terminal leaves the service range of the access network device, or a time period in which the terminal is in the service range of the access network device.

For another example, when the measurement item includes the terminal traffic measurement item, the measurement information includes a measurement result of terminal traffic, the identifier of the access network device in which the terminal is located, the identifier of the cell in which the terminal is located, and measurement time corresponding to the measurement result.

For example, the second network device may be an access network device or a core network device. When the second network device is the core network device, the measurement information may further include a connection status of the terminal. The core network device is, for example, an AMF.

Similar to the method 400, in the method 500, a manner in which the second network device obtains the measurement information is not limited either. The measurement information may be received by the second network device from another communication device (for example, a terminal), or may be measured by the second network device. The method 500 further includes a network policy execution process, which is not shown in FIG. 5. Step 502 may be performed after execution of the network policy is completed, and the network policy is obtained by the first network device based on the AI model. For example, based on the network policy, the terminal is handed over from the first network device to the second network device, and then the second network device may perform step 502.

Step 503: The second network device sends the measurement information to the first network device, or the first network device receives the measurement information from the second network device. In this way, the first network device may optimize the AI model based on the received measurement information.

In a possible implementation, step 503 specifically includes: The second network device sends the measurement information based on the first measurement configuration information or the second measurement configuration information. For more detailed descriptions, refer to an implementation in which the second network device sends the measurement information based on the first measurement configuration information in FIG. 4.

Sending of the measurement information may be based on a new procedure between network devices. Alternatively, sending of the measurement information may be based on an existing procedure between network devices. For example, the measurement information may be included in an access and mobility indication sent by the second network device to the first network device.

According to the method 500, the first network device may provide, for the second network device, information about a measurement item that corresponds to the measurement information required for optimizing the AI model and corresponding measurement configuration information; and the second network device may collect the measurement information based on the information provided by the first network device, and provide the collected measurement information for the first network device. In this way, the first network device can obtain, from the second network device, the measurement information for optimizing the AI model. This helps optimize the AI model. In addition, because measurement information required for different AI models may be different, according to the method, a case in which the second network device provides, for the first network device, measurement information that does not satisfy a requirement of the AI model can be avoided. Therefore, the method helps improve accuracy of optimizing the AI model. In addition, the first network device provides the measurement configuration information for the second network device. This helps avoid the second network device obtaining the measurement information that does not satisfy the requirement of the AI model. For example, the AI model requires measurement information whose measurement periodicity is 1 second, and the second network device obtains and sends the measurement information in a measurement periodicity of 3 seconds. This helps further ensure that the measurement information satisfies a requirement for optimizing the AI model.

In some other implementations of the method 500, when the first information includes the identifiers of the one or more to-be-measured terminals, the method 500 further includes: The second network device determines a terminal that is in the one or more to-be-measured terminals and that supports the second measurement item (which is referred to as a supporting terminal for short). In this case, the second network device obtains measurement information of the supporting terminal.

In some other implementations of the method 500, the method 500 further includes step 504: The second network device sends second information to the first network device, or the first network device receives second information from the second network device. The second information indicates at least one of the second measurement item, the supporting terminal, or the second measurement configuration information. In this way, the first network device may determine, with reference to the second information, whether to optimize the AI model by using the measurement information sent by the second network device. For detailed descriptions, refer to step 404.

That the second information indicates the second measurement item, the terminal that supports the second measurement item in the one or more to-be-measured terminals, and the second measurement configuration information is used as an example. In a specific implementation of the second information, the second information carries a terminal identifier list acknowledgment information element, a measurement item request indication acknowledgment information element, and a measurement configuration request indication acknowledgment information element. The terminal identifier list acknowledgment information element includes an identifier of the supporting terminal, the measurement item request indication acknowledgment information element indicates the second measurement item, and the measurement configuration request indication acknowledgment information element indicates the second measurement configuration information.

It should be noted that, the second information may be determined based on the first information, and the second information may respond to the first information. For example, if the terminal traffic measurement item is requested in the first information, but the terminal performance measurement item, the terminal service measurement item, and the terminal movement path measurement item are not requested, the second information feeds back whether to agree on the terminal traffic measurement item. For another example, if the measurement duration is requested in the first information, but the measurement count, the measurement end time, and the measurement termination condition are not requested, the second information feeds back whether to agree on the measurement duration.

For a more specific implementation of step 504, refer to step 404.

In some other implementations of the method 500, the method 500 further includes step 505: The second network device sends third information to the first network device, or the first network device receives third information from the second network device, where the third information indicates retention time of a terminal context. For an implementation of step 505, refer to step 405.

In some other implementations of the method 500, before step 505, the method 500 further includes step 506: The first network device sends fourth information to the second network device, or the second network device receives fourth information from the first network device, where the fourth information is for requesting the retention time of the terminal context. For an implementation of step 506, refer to step 406.

It should be further noted that, when the second network device does not indicate retention duration of the terminal context to the first network device, the first network device may automatically select time for retaining the terminal context.

It should be further noted that, in the method 500, a sequence of performing step 501, step 504, step 505, and step 506 and executing the network policy obtained based on the AI model is not limited. For example, step 501, step 504, step 505, and step 506 may be performed first, and then the network policy is executed. For another example, the network policy may be executed first, and then step 501, step 504, step 505, and step 506 are performed. For still another example, step 501, step 504, step 505, and step 506 may be performed when the network policy is executed.

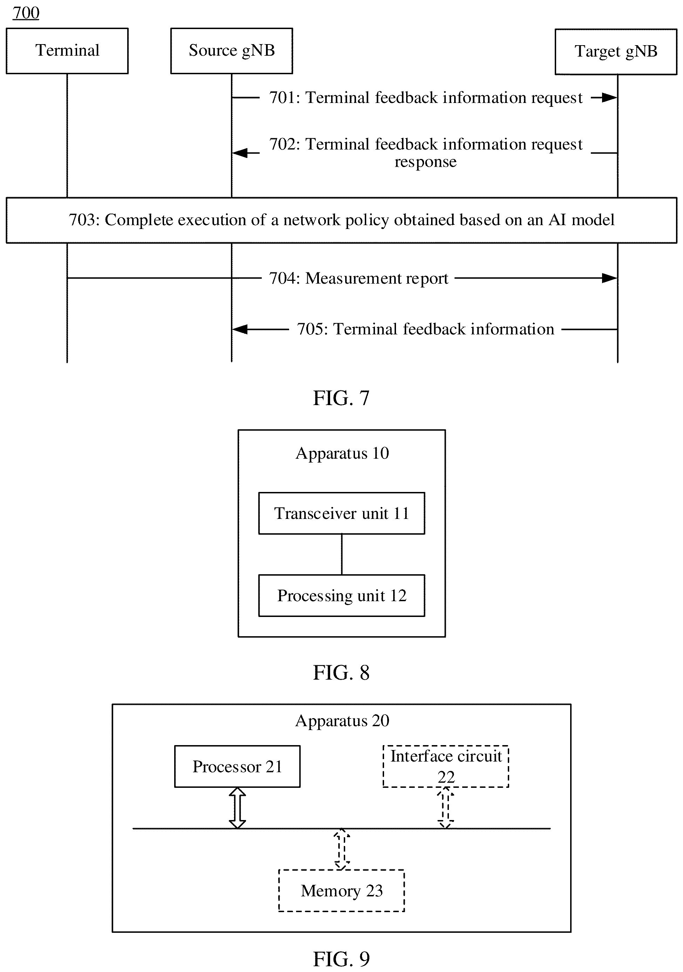

According to the embodiments shown in FIG. 4 and FIG. 5, the following describes a communication method provided in this application with reference to signaling procedures shown in FIG. 6 and FIG. 7. It may be understood that, embodiments provided in this application may be mutually referenced, cited, or combined. In addition, content described in the embodiments shown in FIG. 4 and FIG. 5 are not described in detail again. A method 600 shown in FIG. 6 and a method 700 shown in FIG. 7 are methods performed by a terminal, a source gNB, and a target gNB or performed by modules or units (for example, a circuit and a chip) in the terminal, the source gNB, and the target gNB in a handover procedure of the terminal. When an AI model is deployed on the source gNB, a network policy may be obtained based on the AI model. The target gNB may execute the network policy obtained based on the AI model. For descriptions of "the target gNB executes the network policy obtained based on the AI model", refer to the method 400. Details are not described again. The source gNB may correspond to the foregoing first network device, and the target gNB may correspond to the foregoing second network device.

FIG. 6 is a schematic flowchart of a communication method 600 according to this application.

The method 600 is a specific implementation of the method 400, and the method 600 includes at least some of the following content.

Step 601: A source gNB sends a handover request message to a target gNB.

The handover request message includes an AI handover cause, and the AI handover cause includes information about an AI model. For the information about the AI model, refer to step 401.

Step 602: The target gNB sends terminal context retention indication information to the source gNB.

The terminal context retention indication information indicates retention time of a terminal context. For descriptions of the terminal context retention indication information, refer to the third information in the method 400.

Step 602 is an optional step.

Step 603: Complete execution of a network policy obtained based on the AI model.

Specifically, a terminal is handed over from the source gNB to the target gNB based on the network policy obtained based on the AI model.

Step 604: The target gNB obtains terminal feedback information.

Specifically, the target gNB determines a first measurement item based on an AI handover cause of a handover request, and obtains terminal feedback information of the first measurement item. For example, a manner in which the target gNB obtains the terminal feedback information of the first measurement item may be shown in FIG. 6, that is, the terminal feedback information of the first measurement item is obtained by collecting a measurement report of the terminal. For descriptions of the terminal feedback information, refer to the measurement information in the method 400.

Step 605: The target gNB sends the obtained terminal feedback information to the source gNB.

For a specific implementation in which the target gNB sends the obtained terminal feedback information to the source gNB, refer to step 403.

FIG. 7 is a schematic flowchart of a communication method 700 according to this application.

The method 700 is a specific implementation of the method 500, and the method 700 includes at least some of the following content.

Step 701: A source gNB sends a terminal feedback information request to a target gNB.

For descriptions of the terminal feedback information request, refer to the first information in the method 500.

Step 702: The target gNB sends a terminal feedback information request response to the source gNB.

For descriptions of the terminal feedback information request response, refer to the second information in the method 500.

Step 703: Complete execution of a network policy obtained based on an AI model.

Specifically, a terminal is handed over from the source gNB to the target gNB based on the network policy obtained based on the AI model.

Step 704: The target gNB obtains terminal feedback information.

Specifically, the target gNB determines a second measurement item based on the terminal feedback information request, and obtains terminal feedback information of the second measurement item. For example, a manner in which the target gNB obtains the terminal feedback information of the second measurement item may be shown in FIG. 7, that is, the terminal feedback information of the second measurement item is obtained by collecting a measurement report of the terminal. For descriptions of the terminal feedback information, refer to the measurement information in the method 500.

Step 705: The target gNB sends the obtained terminal feedback information to the source gNB.

For a specific implementation in which the target gNB sends the obtained terminal feedback information to the source gNB, refer to step 503.

It should be noted that, the foregoing embodiments of this application may be independently implemented, or may be implemented together in an appropriate manner. This is not limited in this application.

The foregoing describes in detail the method provided in this application with reference to FIG. 4 to FIG. 7. The following describes in detail apparatus embodiments of this application with reference to FIG. 8 and FIG. 9.

It may be understood that, to implement functions in the foregoing embodiments, the apparatus in FIG. 8 or FIG. 9 includes a corresponding hardware structure and/or software module for performing each function. A person skilled in the art should be easily aware that, in this application, units and method steps in examples described with reference to embodiments disclosed in this application can be implemented in a form of hardware or a combination of hardware and computer software.

FIG. 8 and FIG. 9 are diagrams of structures of possible apparatuses according to embodiments of this application. These apparatuses may be configured to implement a function of the first network device or the second network device in the foregoing method embodiments, and therefore can also achieve beneficial effects of the foregoing method embodiments.

As shown in FIG. 8, the apparatus 10 includes a transceiver unit 11 and a processing unit 12.

When the apparatus 10 is configured to implement a function of the first network device in the method embodiment shown in FIG. 4, the transceiver unit 11 is configured to: send first information to a second network device, where the first information includes information about an AI model, and the information about the AI model is for determining a first measurement item; and receive measurement information of the first measurement item from the second network device, where the measurement information is for optimizing the AI model, and the second network device is configured to execute a network policy obtained based on the AI model.

For example, the information about the AI model includes an identifier of the AI model and/or information about a service corresponding to the AI model.

For example, the first information further includes identifiers of one or more to-be-measured terminals and/or first measurement configuration information for measuring the first measurement item.

For example, the first measurement configuration information includes at least one of the following information: a measurement time interval, measurement start time, or measurement termination information.

For example, the measurement termination information includes at least one of the following information: measurement duration, a measurement count, measurement end time, or a measurement termination condition.

For example, the measurement termination condition includes at least one of the following information: an identifier of an AI-triggered event or configuration information of an AI-triggered event.

For example, the measurement information includes a cause of measurement termination.

For example, the transceiver unit 11 is further configured to: receive second information from the second network device, where the second information indicates at least one of the first measurement item, a terminal that supports the first measurement item in the one or more to-be-measured terminals, or second measurement configuration information, and the second measurement configuration information is measurement configuration information actually used for measuring the first measurement item.

For example, the transceiver unit 11 is further configured to: receive third information from the second network device, where the third information indicates retention duration of a terminal context.

For example, the transceiver unit 11 is further configured to: send fourth information to the second network device, where the fourth information is for requesting the retention duration.

For example, the first measurement item includes at least one of the following measurement items: a terminal performance measurement item, a terminal traffic measurement item, a terminal service measurement item, or a terminal movement path measurement item.

For example, the terminal performance measurement item includes at least one of the following measurement items: an uplink throughput, a downlink throughput, an uplink data packet delay, a downlink data packet delay, an uplink packet loss rate, or a downlink packet loss rate.

For example, the first information is included in a handover cause of a handover request.

For example, a service corresponding to the network policy includes at least one of the following: network energy saving, load balancing, mobility optimization, terminal movement path prediction, or terminal traffic prediction.

When the apparatus 10 is configured to implement a function of the second network device in the method embodiment shown in FIG. 4, the transceiver unit 11 is configured to: receive first information from a first network device, where the first information includes information about an AI model, and the information about the AI model is for determining a first measurement item; the transceiver unit 11 and/or the processing unit 12 are/is configured to: obtain measurement information based on the first measurement item; and the transceiver unit 11 is further configured to: send the measurement information to the first network device, where the measurement information is for optimizing the AI model, and the second network device is configured to execute a network policy obtained based on the AI model.

For example, the processing unit 12 is further configured to: determine the first measurement item based on a correspondence between the first information and the first measurement item.

For example, the information about the AI model includes an identifier of the AI model and/or information about a service corresponding to the AI model.

For example, the first information further includes identifiers of one or more to-be-measured terminals and/or first measurement configuration information for measuring the first measurement item.

For example, the first measurement configuration information includes at least one of the following information: a measurement time interval, measurement start time, or measurement termination information.

For example, the measurement termination information includes at least one of the following information: measurement duration, a measurement count, measurement end time, or a measurement termination condition.

For example, the measurement termination condition includes at least one of the following information: an identifier of an AI-triggered event or configuration information of an AI-triggered event.

For example, the measurement information includes a cause of measurement termination.

For example, the transceiver unit 11 is further configured to: send second information to the first network device, where the second information indicates at least one of the first measurement item, a terminal that supports the first measurement item in the one or more to-be-measured terminals, or second measurement configuration information, and the second measurement configuration information is measurement configuration information actually used for measuring the first measurement item.

For example, the processing unit 12 is further configured to: determine the second measurement configuration information based on the first information, where the second measurement configuration information is the measurement configuration information actually used for measuring the first measurement item.

For example, the transceiver unit 11 is further configured to: send third information to the first network device, where the third information indicates retention duration of a terminal context.

For example, the transceiver unit 11 is further configured to: receive fourth information from the first network device, where the fourth information is for requesting the retention duration.

For example, the first measurement item includes at least one of the following measurement items: a terminal performance measurement item, a terminal traffic measurement item, a terminal service measurement item, or a terminal movement path measurement item.

For example, the terminal performance measurement item includes at least one of the following measurement items: an uplink throughput, a downlink throughput, an uplink data packet delay, a downlink data packet delay, an uplink packet loss rate, or a downlink packet loss rate.

For example, the first information is included in a handover cause of a handover request.

For example, a service corresponding to the network policy includes at least one of the following: network energy saving, load balancing, mobility optimization, terminal movement path prediction, or terminal traffic prediction.

When the apparatus 10 is configured to implement a function of the first network device in the method embodiment shown in FIG. 5, the transceiver unit 11 is configured to: send first information to a second network device, where the first information is for determining a first measurement item, and the first information includes first measurement configuration information for measuring the first measurement item; and receive measurement information from the second network device, where the measurement information is for optimizing an AI model, the second network device is configured to execute a network policy obtained based on the AI model, and a second measurement item corresponding to the measurement information is included in the first measurement item.

For example, the first measurement configuration information includes at least one of the following information: a measurement time interval, measurement start time, or measurement termination information.

For example, the measurement termination information includes at least one of the following information: measurement duration, a measurement count, measurement end time, or a measurement termination condition.

For example, the measurement termination condition includes at least one of the following information: an identifier of an AI-triggered event or configuration information of an AI-triggered event.

For example, the measurement information includes a cause of measurement termination.

For example, the first information includes indication information of the first measurement item and the first measurement configuration information; or the first information includes information about the AI model and the first measurement configuration information.

For example, the first information further includes identifiers of one or more to-be-measured terminals.

For example, the information about the AI model includes an identifier of the AI model and/or information about a service corresponding to the AI model.

For example, the transceiver unit 11 is further configured to: receive second information from the second network device, where the second information indicates at least one of the second measurement item, a terminal that supports the second measurement item in the one or more to-be-measured terminals, or second measurement configuration information, and the second measurement configuration information is for measuring the second measurement item.

For example, the transceiver unit 11 is further configured to: receive third information from the second network device, where the third information indicates retention duration of a terminal context.

For example, the transceiver unit 11 is further configured to: send fourth information to the second network device, where the fourth information is for requesting the retention duration.

For example, the first measurement item includes at least one of the following measurement items: a terminal performance measurement item, a terminal traffic measurement item, a terminal service measurement item, or a terminal movement path measurement item.

For example, the terminal performance measurement item includes at least one of the following measurement items: an uplink throughput, a downlink throughput, an uplink data packet delay, a downlink data packet delay, an uplink packet loss rate, or a downlink packet loss rate.

For example, the information about the AI model is included in a handover cause of a handover request.

For example, a service corresponding to the network policy includes at least one of the following: network energy saving, load balancing, mobility optimization, terminal movement path prediction, or terminal traffic prediction.

When the apparatus 10 is configured to implement a function of the second network device in the method embodiment shown in FIG. 5, the transceiver unit 11 is configured to: receive first information from a first network device, where the first information is for determining a first measurement item, and the first information includes first measurement configuration information for measuring the first measurement item; the transceiver unit 11 and/or the processing unit 12 are/is configured to: obtain measurement information based on the first measurement item and the first measurement configuration information; and the transceiver unit 11 is further configured to: send the measurement information to the first network device, where the measurement information is for optimizing an AI model on the first network device, the second network device is configured to execute a network policy obtained based on the AI model, and a second measurement item corresponding to the measurement information is included in the first measurement item.

For example, the transceiver unit 11 and/or the processing unit 12 are/is specifically configured to: determine the second measurement item and second measurement configuration information based on the first measurement item and the first measurement configuration information, where the second measurement configuration information is for measuring the second measurement item; and obtain the measurement information based on the second measurement item and the second measurement configuration information.

For example, the first measurement configuration information includes at least one of the following information: a measurement time interval, measurement start time, or measurement termination information.

For example, the measurement termination information includes at least one of the following information: measurement duration, a measurement count, measurement end time, or a measurement termination condition.

For example, the measurement termination condition includes at least one of the following information: an identifier of an AI-triggered event or configuration information of an AI-triggered event.

For example, the measurement information includes a cause of measurement termination.

For example, the first information includes indication information of the first measurement item and the first measurement configuration information; or the first information includes information about the AI model and the first measurement configuration information.

For example, the first information further includes identifiers of one or more to-be-measured terminals.

For example, the information about the AI model includes an identifier of the AI model and/or information about a service corresponding to the AI model.

For example, the transceiver unit 11 is further configured to: send second information to the first network device, where the second information indicates at least one of the second measurement item, a terminal that supports the second measurement item in the one or more to-be-measured terminals, or the second measurement configuration information.

For example, the transceiver unit 11 is further configured to: send third information to the first network device, where the third information indicates retention duration of a terminal context.

For example, the transceiver unit 11 is further configured to: receive fourth information from the first network device, where the fourth information is for requesting the retention duration.

For example, the first measurement item includes at least one of the following measurement items: a terminal performance measurement item, a terminal traffic measurement item, a terminal service measurement item, or a terminal movement path measurement item.

For example, the terminal performance measurement item includes at least one of the following measurement items: an uplink throughput, a downlink throughput, an uplink data packet delay, a downlink data packet delay, an uplink packet loss rate, or a downlink packet loss rate.

For example, the information about the AI model is included in a handover cause of a handover request.

For example, a service corresponding to the network policy includes at least one of the following: network energy saving, load balancing, mobility optimization, terminal movement path prediction, or terminal traffic prediction.

For more detailed descriptions of the transceiver unit 11 and the processing unit 12, refer to related descriptions in the foregoing method embodiments. Details are not described herein again.

As shown in FIG. 9, the apparatus 20 includes a processor 21. The processor 21 is coupled to a memory 23, and the memory 23 is configured to store instructions. When the apparatus 20 is configured to implement the foregoing method, the processor 21 is configured to execute the instructions in the memory 23, to implement a function of the foregoing processing unit 12.

For example, the apparatus 20 further includes the memory 23.

For example, the apparatus 20 further includes an interface circuit 22. The processor 21 and the interface circuit 22 are coupled to each other. It may be understood that, the interface circuit 22 may be a transceiver or an input/output interface. When the apparatus 20 is configured to implement the foregoing method, the processor 21 is configured to execute the instructions, to implement the function of the foregoing processing unit 12, and the interface circuit 22 is configured to implement a function of the foregoing transceiver unit 11.

For example, when the apparatus 20 is a chip used in a first network device or a second network device, the chip implements a function of the first network device or the second network device in the foregoing method embodiments. The chip receives information from another module (for example, a radio frequency module or an antenna) in the first network device or the second network device, where the information is sent by another apparatus to the first network device or the second network device. Alternatively, the chip sends information to another module (for example, a radio frequency module or an antenna) in the first network device or the second network device, where the information is sent by the first network device or the second network device to another apparatus.

This application further provides a communication apparatus, including a processor. The processor is coupled to a memory. The memory is configured to store a computer program or instructions and/or data. The processor is configured to execute the computer program or the instructions stored in the memory, or read the data stored in the memory, to perform the method in the foregoing method embodiments. For example, there are one or more processors. For example, the communication apparatus includes a memory. For example, there are one or more memories. For example, the memory and the processor are integrated together or arranged separately.

This application further provides a computer-readable storage medium. The computer-readable storage medium stores computer instructions for implementing the method performed by the first network device or the second network device in the foregoing method embodiments.

This application further provides a computer program product, including instructions. When the instructions are executed by a computer, the method performed by the first network device or the second network device in the foregoing method embodiments is implemented.

This application further provides a communication system. The communication system includes at least one of the first network device or the second network device in the foregoing embodiments.

For explanations and beneficial effects of related content of any one of the apparatuses provided above, refer to corresponding method embodiments provided above. Details are not described herein again.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor, or may be any conventional processor.

Method steps in embodiments of this application may be implemented in a hardware manner, or may be implemented by a processor by executing software instructions. The software instructions may be constituted by corresponding software modules. The software modules may be stored in a random access memory, a flash memory, a read-only memory, a programmable read-only memory, an erasable programmable read-only memory, an electrically erasable programmable read-only memory, a register, a hard disk, a removable hard disk, a compact disc read-only memory (compact disc read-only memory, CD-ROM), or any other form of storage medium well known in the art. For example, a storage medium is coupled to a processor, so that the processor can read information from the storage medium and write information into the storage medium. Certainly, the storage medium may alternatively be a component of the processor. The processor and the storage medium may be located in an ASIC. In addition, the ASIC may be located in a first network device or a second network device. Certainly, the processor and the storage medium may alternatively exist in a first network device or a second network device as discrete components.

All or some of the foregoing embodiments may be implemented by using software, hardware, firmware, or any combination thereof. When software is used for implementing embodiments, all or some of embodiments may be implemented in a form of a computer program product. The computer program product includes one or more computer programs or instructions. When the computer programs or the instructions are loaded and executed on a computer, all or some of procedures or functions according to embodiments of this application are performed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, a computer, a server, or a data center to another website, computer, server, or data center in a wired or wireless manner. The computer-readable storage medium may be any usable medium that can be accessed by a computer, or a data storage device, such as a server or a data center, integrating one or more usable media. The usable medium may be a magnetic medium, such as a floppy disk, a hard disk, or a magnetic tape; or may be an optical medium, for example, a digital video disc; or may be a semiconductor medium, for example, a solid-state drive.

In embodiments of this application, unless otherwise specified or there is a logical conflict, terms and/or descriptions in different embodiments are consistent and may be mutually referenced. Technical features in different embodiments may be combined based on an internal logical relationship thereof, to form a new embodiment.

It may be understood that, various numbers in embodiments of this application are merely used for differentiation for ease of description, but are not used for limiting the scope of embodiments of this application. Sequence numbers of the foregoing processes do not mean execution sequences. The execution sequences of the processes should be determined based on functions and internal logic of the processes.

Unless otherwise specified, meanings of all technical and scientific terms used in embodiments of this application are the same as those usually understood by a person skilled in the technical field of this application. The terms used in this application are merely intended to describe objectives of specific embodiments, but are not intended to limit the scope of this application. It should be understood that, the foregoing is an example for description, and the foregoing examples are merely intended to help a person skilled in the art understand embodiments of this application, but are not intended to limit embodiments of this application to examples of specific values or specific scenarios. It is clear that a person skilled in the art can make various equivalent modifications or variations based on the examples provided above, and such modifications and variations also fall within the scope of embodiments of this application.

## Claims

1. A communication method, wherein the method is applied to a first network device, and the method comprises:
sending first information to a second network device, wherein the first information comprises information about an artificial intelligence AI model, and the information about the AI model is for determining a first measurement item; and
receiving measurement information of the first measurement item from the second network device, wherein the measurement information is for optimizing the AI model, and the second network device is configured to execute a network policy obtained based on the AI model.

2. The method according to claim 1, wherein
the information about the AI model comprises an identifier of the AI model and/or information about a service corresponding to the AI model.

3. The method according to claim 1 or 2, wherein
the first information further comprises identifiers of one or more to-be-measured terminals and/or first measurement configuration information for measuring the first measurement item.

4. The method according to claim 3, wherein
the first measurement configuration information comprises at least one of the following information: a measurement time interval, measurement start time, or measurement termination information.

5. The method according to claim 4, wherein
the measurement termination information comprises at least one of the following information: measurement duration, a measurement count, measurement end time, or a measurement termination condition.

6. The method according to claim 5, wherein
the measurement termination condition comprises at least one of the following information: an identifier of an AI-triggered event or configuration information of an AI-triggered event.

7. The method according to claim 6, wherein
the measurement information comprises a cause of measurement termination.

8. The method according to any one of claims 3 to 7, wherein the method further comprises:
receiving second information from the second network device, wherein the second information indicates at least one of the first measurement item, a terminal that supports the first measurement item in the one or more to-be-measured terminals, or second measurement configuration information, and the second measurement configuration information is measurement configuration information actually used for measuring the first measurement item.

9. The method according to any one of claims 1 to 8, wherein the method further comprises:
receiving third information from the second network device, wherein the third information indicates retention duration of a terminal context.

10. The method according to claim 9, wherein the method further comprises:
sending fourth information to the second network device, wherein the fourth information is for requesting the retention duration.

11. The method according to any one of claims 1 to 10, wherein
the first measurement item comprises at least one of the following measurement items: a terminal performance measurement item, a terminal traffic measurement item, a terminal service measurement item, or a terminal movement path measurement item.

12. The method according to any one of claims 1 to 10, wherein
the terminal performance measurement item comprises at least one of the following measurement items: an uplink throughput, a downlink throughput, an uplink data packet delay, a downlink data packet delay, an uplink packet loss rate, or a downlink packet loss rate.

13. The method according to any one of claims 1 to 12, wherein
the first information is comprised in a handover cause of a handover request.

14. The method according to any one of claims 1 to 13, wherein
a service corresponding to the network policy comprises at least one of the following: network energy saving, load balancing, mobility optimization, terminal movement path prediction, or terminal traffic prediction.

15. A communication method, wherein the method is applied to a second network device, and the method comprises:
receiving first information from a first network device, wherein the first information comprises information about an artificial intelligence AI model, and the information about the AI model is for determining a first measurement item;
obtaining measurement information based on the first measurement item; and
sending the measurement information to the first network device, wherein the measurement information is for optimizing the AI model, and the second network device is configured to execute a network policy obtained based on the AI model.

16. The method according to claim 15, wherein the method further comprises:
determining the first measurement item based on a correspondence between the first information and the first measurement item.

17. The method according to claim 15 or 16, wherein
the information about the AI model comprises an identifier of the AI model and/or information about a service corresponding to the AI model.

18. The method according to any one of claims 15 to 17, wherein
the first information further comprises identifiers of one or more to-be-measured terminals and/or first measurement configuration information for measuring the first measurement item.

19. The method according to claim 18, wherein
the first measurement configuration information comprises at least one of the following information: a measurement time interval, measurement start time, or measurement termination information.

20. The method according to claim 19, wherein
the measurement termination information comprises at least one of the following information: measurement duration, a measurement count, measurement end time, or a measurement termination condition.

21. The method according to claim 20, wherein
the measurement termination condition comprises at least one of the following information: an identifier of an AI-triggered event or configuration information of an AI-triggered event.

22. The method according to claim 21, wherein
the measurement information comprises a cause of measurement termination.

23. The method according to any one of claims 18 to 22, wherein the method further comprises:
sending second information to the first network device, wherein the second information indicates at least one of the first measurement item, a terminal that supports the first measurement item in the one or more to-be-measured terminals, or second measurement configuration information, and the second measurement configuration information is measurement configuration information actually used for measuring the first measurement item.

24. The method according to any one of claims 15 to 23, wherein the method further comprises:
determining the second measurement configuration information based on the first information, wherein the second measurement configuration information is the measurement configuration information actually used for measuring the first measurement item.

25. The method according to any one of claims 15 to 24, wherein the method further comprises:
sending third information to the first network device, wherein the third information indicates retention duration of a terminal context.

26. The method according to claim 25, wherein the method further comprises:
receiving fourth information from the first network device, wherein the fourth information is for requesting the retention duration.

27. The method according to any one of claims 15 to 26, wherein
the first measurement item comprises at least one of the following measurement items: a terminal performance measurement item, a terminal traffic measurement item, a terminal service measurement item, or a terminal movement path measurement item.

28. The method according to claim 27, wherein the terminal performance measurement item comprises at least one of the following measurement items: an uplink throughput, a downlink throughput, an uplink data packet delay, a downlink data packet delay, an uplink packet loss rate, or a downlink packet loss rate.

29. The method according to any one of claims 15 to 28, wherein
when the first measurement item is a terminal-level measurement item, the measurement information obtained by the second network device comprises one or more pieces of measurement information of the first measurement item, and the measurement information comprises: a measurement result of the first measurement item, measurement time corresponding to the measurement result, and information about a measurement position that corresponds to the measurement result.

30. The method according to any one of claims 15 to 29, wherein
the first information is comprised in a handover cause of a handover request.

31. The method according to any one of claims 15 to 30, wherein a service corresponding to the network policy comprises at least one of the following: network energy saving, load balancing, mobility optimization, terminal movement path prediction, or terminal traffic prediction.

32. A communication method, wherein the method is applied to a first network device, and the method comprises:
sending first information to a second network device, wherein the first information is for determining a first measurement item, and the first information comprises first measurement configuration information for measuring the first measurement item; and
receiving measurement information from the second network device, wherein the measurement information is for optimizing an AI model, the second network device is configured to execute a network policy obtained based on the AI model, and a second measurement item corresponding to the measurement information is comprised in the first measurement item.

33. The method according to claim 32, wherein
the first measurement configuration information comprises at least one of the following information: a measurement time interval, measurement start time, or measurement termination information.

34. The method according to claim 33, wherein
the measurement termination information comprises at least one of the following information: measurement duration, a measurement count, measurement end time, or a measurement termination condition.

35. The method according to claim 34, wherein
the measurement termination condition comprises at least one of the following information: an identifier of an AI-triggered event or configuration information of an AI-triggered event.

36. The method according to claim 35, wherein
the measurement information comprises a cause of measurement termination.

37. The method according to any one of claims 32 to 36, wherein
the first information comprises indication information of the first measurement item and the first measurement configuration information; or
the first information comprises information about the AI model and the first measurement configuration information.

38. The method according to claim 37, wherein
the information about the AI model comprises an identifier of the AI model and/or information about a service corresponding to the AI model.

39. The method according to any one of claims 32 to 38, wherein
the first information further comprises identifiers of one or more to-be-measured terminals.

40. The method according to any one of claims 32 to 39, wherein
the method further comprises: receiving second information from the second network device, wherein the second information indicates at least one of the second measurement item, a terminal that supports the second measurement item in the one or more to-be-measured terminals, or second measurement configuration information, and the second measurement configuration information is for measuring the second measurement item.

41. The method according to any one of claims 32 to 40, wherein the method further comprises:
receiving third information from the second network device, wherein the third information indicates retention duration of a terminal context.

42. The method according to claim 41, wherein the method further comprises:
sending fourth information to the second network device, wherein the fourth information is for requesting the retention duration.

43. The method according to any one of claims 32 to 42, wherein
the first measurement item comprises at least one of the following measurement items: a terminal performance measurement item, a terminal traffic measurement item, a terminal service measurement item, or a terminal movement path measurement item.

44. The method according to claim 43, wherein
the terminal performance measurement item comprises at least one of the following measurement items: an uplink throughput, a downlink throughput, an uplink data packet delay, a downlink data packet delay, an uplink packet loss rate, or a downlink packet loss rate.

45. The method according to any one of claims 37 to 44, wherein
the information about the AI model is comprised in a handover cause of a handover request.

46. The method according to any one of claims 32 to 45, wherein
a service corresponding to the network policy comprises at least one of the following: network energy saving, load balancing, mobility optimization, terminal movement path prediction, or terminal traffic prediction.

47. A communication method, wherein the method is applied to a second network device, and the method comprises:
receiving first information from a first network device, wherein the first information is for determining a first measurement item, and the first information comprises first measurement configuration information for measuring the first measurement item;
obtaining measurement information based on the first measurement item and the first measurement configuration information; and
sending the measurement information to the first network device, wherein the measurement information is for optimizing an AI model on the first network device, the second network device is configured to execute a network policy obtained based on the AI model, and a second measurement item corresponding to the measurement information is comprised in the first measurement item.

48. The method according to claim 47, wherein obtaining the measurement information based on the first measurement item and the first measurement configuration information comprises:
determining the second measurement item and second measurement configuration information based on the first measurement item and the first measurement configuration information, wherein the second measurement configuration information is for measuring the second measurement item; and
obtaining the measurement information based on the second measurement item and the second measurement configuration information.

49. The method according to claim 47 or 48, wherein
the first measurement configuration information comprises at least one of the following information: a measurement time interval, measurement start time, or measurement termination information.

50. The method according to claim 49, wherein
the measurement termination information comprises at least one of the following information: measurement duration, a measurement count, measurement end time, or a measurement termination condition.

51. The method according to claim 50, wherein
the measurement termination condition comprises at least one of the following information: an identifier of an AI-triggered event or configuration information of an AI-triggered event.

52. The method according to claim 51, wherein
the measurement information comprises a cause of measurement termination.

53. The method according to any one of claims 47 to 53, wherein
the first information comprises indication information of the first measurement item and the first measurement configuration information; or the first information comprises information about the AI model and the first measurement configuration information.

54. The method according to claim 53, wherein
the information about the AI model comprises an identifier of the AI model and/or information about a service corresponding to the AI model.

55. The method according to any one of claims 47 to 54, wherein
the first information further comprises identifiers of one or more to-be-measured terminals.

56. The method according to any one of claims 47 to 55, wherein the method further comprises:
sending second information to the first network device, wherein the second information indicates at least one of the second measurement item, a terminal that supports the second measurement item in the one or more to-be-measured terminals, or the second measurement configuration information.

57. The method according to any one of claims 47 to 56, wherein the method further comprises:
sending third information to the first network device, wherein the third information indicates retention duration of a terminal context.

58. The method according to claim 57, wherein the method further comprises:
receiving fourth information from the first network device, wherein the fourth information is for requesting the retention duration.

59. The method according to any one of claims 47 to 58, wherein
the first measurement item comprises at least one of the following measurement items: a terminal performance measurement item, a terminal traffic measurement item, a terminal service measurement item, or a terminal movement path measurement item.

60. The method according to claim 59, wherein the terminal performance measurement item comprises at least one of the following measurement items: an uplink throughput, a downlink throughput, an uplink data packet delay, a downlink data packet delay, an uplink packet loss rate, or a downlink packet loss rate.

61. The method according to any one of claims 47 to 60, wherein
when the first measurement item is a terminal-level measurement item, the measurement information obtained by the second network device comprises one or more pieces of measurement information of the first measurement item, and the measurement information comprises: a measurement result of the first measurement item, measurement time corresponding to the measurement result, and information about a measurement position that corresponds to the measurement result.

62. The method according to any one of claims 54 to 61, wherein the information about the AI model is comprised in a handover cause of a handover request.

63. The method according to any one of claims 47 to 62, wherein a service corresponding to the network policy comprises at least one of the following: network energy saving, load balancing, mobility optimization, terminal movement path prediction, or terminal traffic prediction.

64. A communication apparatus, comprising a module or a unit configured to perform the method according to any one of claims 1 to 14, the method according to any one of claims 15 to 31, the method according to any one of claims 32 to 46, or the method according to any one of claims 47 to 63.

65. A communication apparatus, comprising:
a processor, configured to execute a computer program stored in a memory, to cause the apparatus to perform the method according to any one of claims 1 to 14, perform the method according to any one of claims 15 to 31, perform the method according to any one of claims 32 to 46, or perform the method according to any one of claims 47 to 63.

66. The apparatus according to claim 65, wherein the apparatus further comprises the memory.

67. The apparatus according to claim 65 or 66, wherein the apparatus is a chip.

68. A computer-readable storage medium, wherein the computer-readable storage medium stores a computer program; and when the computer program runs on a computer, the computer is caused to perform the method according to any one of claims 1 to 14, perform the method according to any one of claims 15 to 31, perform the method according to any one of claims 32 to 46, or perform the method according to any one of claims 47 to 63.

69. A computer program product, wherein the computer program product comprises instructions for performing the method according to any one of claims 1 to 14, the method according to any one of claims 15 to 31, the method according to any one of claims 32 to 46, or the method according to any one of claims 47 to 63.

70. A communication system, comprising a first network device configured to perform the method according to any one of claims 1 to 14 and a second network device configured to perform the method according to any one of claims 15 to 31; or comprising a first network device configured to perform the method according to any one of claims 32 to 46 and a second network device configured to perform the method according to any one of claims 47 to 63.
